# EUROPÄISCHE PATENTSCHRIFT

(11) **EP 3 375 160 B1**
(45) Veröffentlichungstag und Bekanntmachung des Hinweises auf die Patenterteilung: **04.09.2024**
(21) Anmeldenummer: 16791379.7
(22) Anmeldetag: 03.11.2016
(51) Int. Cl.: H04B 10/116, H04W 4/70, H04W 12/033, H04W 12/0431, H05B 47/19, H04L 9/40, H04W 12/104

(54) **BELEUCHTUNGSEINRICHTUNG ZUR KOMMUNIKATION MIT EINEM MOBILEN ENDGERÄT**
LIGHTING DEVICE FOR COMMUNICATING WITH A MOBILE TERMINAL
DISPOSITIF D'ÉCLAIRAGE DESTINÉ À COMMUNIQUER AVEC UN TERMINAL MOBILE

(30) Priorität: 13.11.2015 DE 102015222417
(43) Veröffentlichungstag der Anmeldung: 19.09.2018
(73) Patentinhaber: OSRAM GmbH, 80807 München (DE); Osram Sylvania Inc., Wilmington, MA 01887 (US)
(72) Erfinder: FEIL, Henry, 82008 Unterhaching (DE); STOUT, Barry, Beverly, Massachusetts 01915 (US)
(74) Vertreter: SJW Patentanwälte
(86) Internationale Anmeldenummer: PCT/EP2016/076520
(87) Internationale Veröffentlichungsnummer: WO 2017/080900

(56) Entgegenhaltungen:
- WO-A1-2014/053929
- US-A1- 2014 053 281
- ALEX CHAPMAN: "Hacking into Internet Connected Light Bulbs", CONTEXTIS, 4 July 2014 (2014-07-04), XP055224856, Retrieved from the Internet <URL:http://www.contextis.com/resources/blog/hacking-internet-connected-light-bulbs/> [retrieved on 20151030]
- TOBIAS ZILLNER: "ZIGBEE EXPLOITED", 6 August 2015 (2015-08-06), XP055338707, Retrieved from the Internet <URL:https://www.blackhat.com/docs/us-15/materials/us-15-Zillner-ZigBee-Exploited-The-Good-The-Bad-And-The-Ugly-wp.pdf> [retrieved on 20170125]
- NITESH DHANJANI: "HACKING LIGHTBULBS: SECURITY EVALUATION OF THE PHILIPS hue PERSONAL WIRELESS LIGHTING SYSTEM", 13 August 2013 (2013-08-13), XP055338721, Retrieved from the Internet <URL:http://www.dhanjani.com/docs/Hacking%20Lighbulbs%20Hue%20Dhanjani%202013.pdf> [retrieved on 20170125]
- MARIO BALLANO BARCENA ET AL: "Insecurity in the Internet of Things", 12 March 2015 (2015-03-12), XP055338712, Retrieved from the Internet <URL:https://www.symantec.com/content/en/us/enterprise/fact_sheets/b-insecurity-in-the-internet-of-things-ds.pdf> [retrieved on 20170125]

## Beschreibung

Die Erfindung betrifft eine Beleuchtungseinrichtung zur Kommunikation mit einem mobilen Endgerät gemäß dem Oberbegriff des Patentanspruchs 1. Weiterhin betrifft die Erfindung ein Beleuchtungssystem mit einer derartigen Beleuchtungseinrichtung. Überdies betrifft die Erfindung ein Verfahren zum Betreiben einer Beleuchtungseinrichtung gemäß dem Oberbegriff des Patentanspruchs 14.

Eine Beleuchtungseinrichtung, welche mit einem mobilen Endgerät kommuniziert, ist beispielsweise aus der WO 2015/148696 A1 bekannt. Diese offenbart Techniken für positionsbasierte Aktionen mithilfe von lichtbasierter Kommunikation. Überdies ist aus der EP 1 263 150 B1 ein Daten-Übertragungssystem mit einer lokalen Bake bekannt, die auf der einen Seite mit steuernden und/oder Informationen übermittelnden Infrastruktur-Einrichtungen, beispielsweise einem zentralen Diensteserver oder dem Internet, und/oder mit einer oder mehreren weiteren lokalen Baken in Kommunikationsverbindung steht und die auf der anderen Seite zur drahtlosen Kommunikationsverbindung mit einem oder mehreren, sich in ihrer Umgebung befindenden Endgeräten eine kombinierte Sende-/Empfangseinrichtung oder in besonderen Fällen nur eine reine Sendeeinrichtung enthält und die in, an oder an der Stelle einer elektrischen Beleuchtungsvorrichtung angeordnet ist. Die lokale Bake ist mit einer die drahtlos zu übertragenden Daten betreffenden, in intelligenter Weise betriebenen Speicher- und/oder Verarbeitungsfunktionalität versehen, wobei die Speicherfunktionalität der lokalen Bake darin besteht, Informationen vorzuhalten, so dass diese Informationen dann mehrfach an mit einem passenden Endgerät ausgerüstete Nutzer abgegeben werden können, ohne jedes Mal von den Infrastruktur-Einrichtungen eingeholt werden zu müssen, und dass die Verarbeitungsfunktionalität darin besteht, dass bestimmte Verarbeitungsvorgänge, die sonst in einer zentralen Verarbeitungseinheit der Infrastruktur-Einrichtungen oder im Endgerät selber ausgeführt werden, auf die lokale Bake ausgelagert werden.

Die aus dem Stand der Technik bekannten Kommunikationskanäle, insbesondere der Kommunikationskanal über ein von einer Leuchte ausgestrahltes Licht, sind von Dritten für die Erstellung eigener Dienstleistungen verwendbar.

Es ist daher Aufgabe der vorliegenden Erfindung, eine Beleuchtungseinrichtung, ein Beleuchtungssystem sowie ein Verfahren bereitzustellen, durch welche eine sicherere Übertragung von Daten von der Beleuchtungseinrichtung zu einem mobilen Endgerät gewährleistet werden kann.

Diese Aufgabe wird gelöst durch eine Beleuchtungseinrichtung mit den Merkmalen des Patentanspruchs 1, ein Beleuchtungssystem mit den Merkmalen des Patentanspruchs 8 sowie durch ein Verfahren mit den Merkmalen des Patentanspruchs 14. Vorteilhafte Weiterbildungen der vorliegenden Erfindung sind Gegenstand der abhängigen Ansprüche.

Die Erfindung geht aus von einer Beleuchtungseinrichtung zur Kommunikation mit einem mobilen Endgerät, umfassend ein Leuchtmittel und ein elektronisches Betriebsgerät zum Betreiben des Leuchtmittels. Die Beleuchtungseinrichtung kann neben einer lichttechnisch wirksamen Komponente in Form einer Leuchte weitere Komponenten umfassen, welche außerhalb der eigentlichen Leuchte angeordnet sind. Das Leuchtmittel kann durch ein LED-Leuchtmittel oder durch eine Niederdruckentladungslampe (Leuchtstofflampe) gebildet sein. Das elektronische Betriebsgerät kann eine programmgesteuerte Recheneinheit umfassen, beispielsweise in Form eines Mikroprozessors oder eines Mikrocontrollers.

Erfindungsgemäß wird die Beleuchtungseinrichtung dadurch weitergebildet, dass sie weiterhin umfasst eine Datenspeichereinheit, in der in einem dafür reservierten Speicherbereich ein erster Schlüssel gespeichert ist, eine Verschlüsselungseinheit, welche dazu ausgelegt ist, den ersten Schlüssel aus dem reservierten Speicherbereich auszulesen und Messwertedaten und/oder Identifikationsdaten, welche zur Übertragung an das mobile Endgerät bestimmt sind, gemäß einer vorgebbaren Verschlüsselungsoperation in eine mit dem ersten Schlüssel verschlüsselte Nachricht umzusetzen, und eine Sendeeinheit, welche dazu ausgelegt ist, die verschlüsselte Nachricht an das mobile Endgerät zu senden. Die Verschlüsselungseinheit ist dabei in vorteilhafter Weise auf einer programmgesteuerten Recheneinheit implementiert. Die Verschlüsselungsoperation ist durch eine mathematische Rechenvorschrift zur Erzeugung eines verschlüsselten Geheimtexts aus einem unverschlüsselten Klartext gegeben, bei dem der Klartext auf dem Geheimtext abgebildet wird. Die sich daraus ergebende Abbildungsfunktion hängt von dem verwendeten ersten Schlüssel ab, welcher für die Verschlüsselungsoperation verwendet wird.

Die Erfinder haben erkannt, dass dynamische Messwertedaten und/oder statische Identifikationsdaten, die von einer Beleuchtungseinrichtung ausgesendet werden, von beliebigen Nutzern ausgelesen und genutzt werden können. Die Daten, insbesondere die Identifikationsdaten, können somit von einem Dritten ausgelesen und in eigene Karten eingetragen werden, sodass eine Verknüpfung zwischen Identifikationsdaten und beispielsweise der Position entsteht. Somit können Dienstleistungen von Dritten entwickelt werden, ohne dafür ein eigenes Beleuchtungssystem umfassend einzelne Beleuchtungseinrichtungen mit entsprechenden Informations- und Sendequellen aufzubauen, oder sich an den Kosten für die bestimmte Infrastruktur zu beteiligen. Somit ist diese Dienstleistung nicht mehr exklusiv für denjenigen, der die Infrastruktur, also die Beleuchtungseinrichtungen beziehungsweise das Beleuchtungssystem, finanziert. Daher ist gemäß der Erfindung vorgesehen, dass die Übertragung der Messwertedaten und/oder Identifikationsdaten nicht statisch offen erfolgt, sondern in verschlüsselter Form durchgeführt wird. Dadurch kann verhindert werden, dass ein Fremdanbieter die vorhandene Infrastruktur nutzt, um sich selbst den Aufwand für den Aufbau einer eigenen Infrastruktur, welche er für die Bereitstellung seines Dienstleistungsangebots benötigt, aufzubauen.

Die Speicherung eines oder mehrerer erster Schlüssel, welche zur späteren lokalen Verwendung im Zusammenhang mit dem Installationsort der jeweiligen Beleuchtungseinrichtung bei einer Installation in ein Beleuchtungssystem bestimmt sind, kann bereits während der Produktion der Beleuchtungseinrichtung erfolgen.

Die Einspeicherung eines oder mehrerer erster Schlüssel kann gemeinsam mit einer Programmierung der Identifikationsdaten, beispielsweise einer Leuchten-ID, erfolgen. Anhand der Leuchten-ID kann neben der Inbetriebnahme und Lokalisierung einer Beleuchtungseinrichtung an einer bestimmten Position auch die Schlüsselzuordnung erfolgen.

Gemäß einer vorteilhaften Weiterbildung kann die Beleuchtungseinrichtung eine Schnittstelle aufweisen, welche dazu ausgelegt ist, schreibend auf den reservierten Speicherbereich zuzugreifen. Auf diese Weise können auch nachträglich, das heißt nach der Produktion der Beleuchtungseinrichtung, weitere oder erste alternative Schlüssel eingespielt werden, welche den vorhandenen Schlüsselsatz ergänzen oder ersetzen. Insbesondere während des Betriebs lassen sich somit neue Schlüssel in die Beleuchtungseinrichtung einspielen. Hierzu kann die Einspielung manuell über eine drahtgebundene oder drahtlose Schnittstelle stattfinden. In besonderer Weise eignet sich hierzu ein bereits bestehendes Netzwerk zur Lichtsteuerung, da für die Einspielung eines neuen Schlüssels nur ein geringes Datenvolumen zu übertragen ist. Ein weiterer Vorteil bei der Verwendung eines bestehenden Netzwerkes zur Lichtsteuerung besteht darin, dass es sich hierbei um ein nicht öffentlich zugängliches Netzwerk handelt.

Gemäß einer vorteilhaften Weiterbildung ist die Schnittstelle Teil des elektronischen Betriebsgeräts, wobei das elektronische Betriebsgerät dazu ausgelegt ist, in einem bestimmungsgemäßen Betrieb der Beleuchtungseinrichtung das Leuchtmittel in Abhängigkeit von einem an der Schnittstelle eingespeisten Steuersignal zu betreiben. Bevorzugt kann die Schnittstelle als drahtgebundene Schnittstelle ausgebildet sein, insbesondere als Zweidrahtschnittstelle. Bevorzugt kann es sich bei der Schnittstelle um eine DALI-Schnittstelle oder um eine Powerline-Schnittstelle handeln. Ebenso kann eine I2C-Schnittstelle oder eine USB-Schnittstelle vorgesehen sein. Alternativ kann die Schnittstelle als drahtlose Schnittstelle ausgebildet sein, insbesondere als Funkschnittstelle. Bevorzugt kann die Schnittstelle als WLAN-Schnittstelle oder Bluetooth-Schnittstelle oder als ZigBee-Schnittstelle ausgebildet sein. Ebenso kann vorgesehen sein, dass die drahtlose Schnittstelle als Infrarot-Schnittstelle ausgebildet ist.

Funkbasierte Sende- und Empfangs-Einheiten, die mit der Beleuchtungseinrichtung gekoppelt sind, können für das Einspielen der Schlüssel dienen. Hier bieten sich Baken oder Beacons an, die mit der Beleuchtungseinrichtung, insbesondere mit dem Betriebsgerät der Beleuchtungseinrichtung, gekoppelt sind. Diese lassen sich auch als Empfänger für Daten verwenden und bieten sich somit als Datenpfad für die Schlüsselverteilung an. Die Empfänger können untereinander ein drahtloses Netzwerk (Mesh) aufbauen, wobei es ausreichend sein kann, an einem Zugangspunkt, insbesondere an einem einzigen Zugangspunkt, die Schlüssel gesammelt einzuspielen. Ein solcher Zugangspunkt kann beispielsweise durch ein Gateway realisiert sein, welches eine datentechnische Kopplung des drahtlosen Netzwerks zu einem bestehenden Netzwerk, beispielsweise einem öffentlichen Netzwerk, aufweist. Es kann vorgesehen sein, dass die Schlüssel von einem Server an das lokale Gateway übertragen werden. Ebenso kann vorgesehen sein, dass die Schlüssel an einem mobilen Endgerät an das Gateway übertragen werden.

Gemäß einer weiteren vorteilhaften Ausführungsform weist die Beleuchtungseinrichtung eine Sende-Empfangs-Einheit auf, insbesondere eine Funk-Bake, wobei die Sende-Empfangs-Einheit dazu ausgelegt ist, schreibend auf den reservierten Speicherbereich zuzugreifen. Die Sende-Empfangs-Einheit kann hierbei besonders vorteilhaft dazu verwendet werden, wenn zur Kommunikation mit dem mobilen Endgerät eine lichtbasierte Kommunikation verwendet wird, einen Rückkanal bereitzustellen, mittels dem das mobile Endgerät Daten an die Beleuchtungseinrichtung zurücksenden kann. Der Vorteil einer solchen Trennung von Vorwärtskanal und Rückwärtskanal auf zwei unterschiedliche physikalische Kanäle bietet somit einen erhöhten Schutz gegenüber einem möglichen unbefugten Zugriff auf die gesendeten Daten.

Gemäß einer vorteilhaften Weiterbildung ist die Sendeeinheit durch die Sende-Empfangs-Einheit gebildet, wobei die Datenspeichereinheit und die Verschlüsselungseinheit auf Komponenten der Sende-Empfangs-Einheit ausgebildet sind. Die Sende-Empfangs-Einheit kann somit durch eine Bake realisiert sein, welche neben dem Senden der Nachricht an das mobile Endgerät auch einen Rückkanal zur Übermittlung von Daten an die Beleuchtungseinrichtung bereitstellt.

Auch die Sende-Empfangs-Einheiten senden eine statische Leuchten-ID aus, die nicht geschützt ist. Um diese Leuchten-ID auch bei diesen Sende-Empfangs-Einheiten zu schützen, kann die gleiche Methode zur Schlüsselverteilung angewendet werden. Hierbei wird in vorteilhafter Weise jedoch der Schlüssel nicht direkt an die Leuchte, mit anderen Worten an das elektronische Betriebsgerät zum Betreiben des Leuchtmittels, weitergereicht, sondern direkt innerhalb der Sende-Empfangs-Einheiten gespeichert. Somit erfolgt der Datenaustausch zwischen der Leuchte (dem Betriebsgerät) und der Sende-Empfangs-Einheit unverschlüsselt, und der Datenverkehr zwischen der Sende-Empfangs-Einheit und dem mobilen Endgerät verschlüsselt.

Gemäß einer weiteren vorteilhaften Ausführungsform umfasst die Sendeeinheit das Leuchtmittel, welches dazu ausgelegt ist, die Nachricht mittels einer lichtbasierten Kommunikation zu senden, wobei die Datenspeichereinheit und die Verschlüsselungseinheit auf Komponenten des elektronischen Betriebsgeräts ausgebildet sind. Bevorzugt deckt die lichtbasierte Kommunikation denselben Raumwinkel ab, der entsprechend dem primären Zweck der Beleuchtungseinrichtung für die Beleuchtung mit dem Leuchtmittel vorgegeben ist, nämlich der Erzielung einer vorgebbaren Helligkeit in dem jeweiligen Wirkungsbereich der Beleuchtungseinrichtung. Insbesondere kann vorgesehen sein, dass die lichtbasierte Kommunikation mittels Licht in dem gleichen Wellenlängenbereich stattfindet wie das zum primären Zweck der Beleuchtung durch das Leuchtmittel abgestrahlte Licht.

Durch die Kommunikation über Licht ist prinzipiell ein sehr sicherer Kanal gegeben, da nur bei einem direkten Sichtkontakt zur Lichtquelle ein Zugang zu diesem Kanal besteht. Er stellt somit eine Punkt-zu-Punkt-Verbindung dar und bietet somit einen sehr sicheren Kanal, welcher gegen einen unbefugten Zugriff von außen weitgehend geschützt ist.

Gemäß einer weiteren vorteilhaften Ausführungsform umfasst der reservierte Speicherbereich eine Vielzahl von ersten Schlüsseln, wobei die Verschlüsselungseinheit dazu ausgelegt ist, in Abhängigkeit von einem an die Beleuchtungseinrichtung bereitstellbaren Schlüsselaktivierungssignal einen der Vielzahl der ersten Schlüssel für die Verschlüsselungsoperation zu verwenden. Das Schlüsselaktivierungssignal kann hierbei von einem externen Schüsselserver zentral bereitgestellt sein oder gemäß einer vorgegebenen Zuordnungsvorschrift in Abhängigkeit von einer Uhr beziehungsweise Kalenderfunktion gesteuert sein.

Alternativ kann vorgesehen sein, dass die Beleuchtungseinrichtung selbst den jeweils zu aktivierenden Schlüssel auswählt. Dies kann beispielsweise zyklisch erfolgen, indem die Schlüssel der Reihenfolge nach, wie sie in dem reservierten Speicherbereich abgelegt sind, aktiviert werden. Ebenso kann vorgesehen sein, dass ein Schlüssel jeweils zufällig aus dem vorhandenen Schlüsselsatz ausgewählt wird. Die Zeitpunkte, zu denen jeweils ein neuer Schlüssel aus dem vorhandenen Schlüsselsatz aktiviert wird, können hierbei in gleichbleibenden vorgebbaren Zeitabständen erfolgen. Alternativ kann vorgesehen sein, dass der jeweilige Aktivierungszeitpunkt eines neuen Schlüssels zufallsgesteuert erfolgt.

Bevorzugt umfasst ein Beleuchtungssystem zumindest eine erfindungsgemäße Beleuchtungseinrichtung, wobei das Beleuchtungssystem weiterhin einen zentralen Schlüsselserver umfasst, welcher in einer Kommunikationsverbindung mit der zumindest einen Beleuchtungseinrichtung steht, woraus sich ein erfindungsgemäßes Beleuchtungssystem ergibt. Der zentrale Schlüsselserver steht hierzu in vorteilhafter Weise für die Verteilung und die Verwaltung der Schlüssel, welche der zumindest einen Beleuchtungseinrichtung zugeteilt sind, bereit.

Gemäß einer vorteilhaften Weiterbildung ist der Schlüsselserver dazu ausgelegt, über die Kommunikationsverbindung ein Schlüsselgenerierungssignal an die zumindest eine Beleuchtungseinrichtung zu senden, wobei die zumindest eine Beleuchtungseinrichtung dazu ausgelegt ist, in Abhängigkeit von dem über die Kommunikationsverbindung empfangenen Schlüsselgenerierungssignal einen individuellen lokalen zweiten Schlüssel zu erzeugen. Besonders bevorzugt kann vorgesehen sein, dass die zumindest eine Beleuchtungseinrichtung dazu ausgelegt ist, einen bisher als ersten Schlüssel zur Verwendung in der Verschlüsselungsoperation zur Generierung eines neuen lokalen Schlüssels einzubeziehen, sodass auf diesem Prinzip der Schlüsselgenerierung durch Bereitstellung eines einzigen über das Schlüsselgenerierungssignal transportierten Generierungsschlüssels auf der Beleuchtungseinrichtung ein neuer Schlüssel erzeugt wird. Insbesondere, wenn das Beleuchtungssystem eine Vielzahl von Beleuchtungseinrichtungen umfasst, kann auf diese Weise sichergestellt werden, dass durch die Bereitstellung eines einzigen zentralen Generierungsschlüssels an die einzelnen Beleuchtungseinrichtungen in jeder der jeweiligen Beleuchtungseinrichtung ein individueller lokaler Schlüssel erzeugt wird. Der bisherige erste Schlüssel in den Beleuchtungseinrichtungen kann somit als sogenannter "Seat Key" verwendet werden. Wenn die Schlüsselgenerierung von dem zentralen Schlüsselserver ausgelöst wird, kann das Schlüsselgenerierungssignal an alle Beleuchtungseinrichtungen gesendet werden. Idealerweise wird dieser Prozess in Zeiten ausgeführt, wo das Beleuchtungssystem nicht im Einsatz ist beziehungsweise kein oder nur ein geringes Datenaufkommen herrscht, beispielsweise nachts.

Gemäß einer vorteilhaften Weiterbildung ist die zumindest eine Beleuchtungseinrichtung dazu ausgelegt, zu Zeiten der Erzeugung des individuellen lokalen zweiten Schlüssels einen Zeitgeber mit einer individuell vorgebbaren Ablaufdauer zu starten, und nach dem Ablaufen des Zeitgebers den zweiten Schlüssel als neuen für die Verschlüsselungsoperation verwendeten ersten Schlüssel über die Kommunikationsverbindung an den Schlüsselserver zu melden. Dadurch kann die Datenmenge, die bei der Rückmeldung der neuen Schlüssel entsteht, auf ein breiteres Zeitfenster verteilt werden, wodurch eine zeitweise Überlastung der Kommunikation, welche insbesondere durch ein Netzwerk zur Lichtsteuerung bereitgestellt werden kann, vermieden wird. Somit kann ein individueller zeitlicher Versatz zwischen der Generierung und der Aktivierung eines neuen Schlüssels definiert werden. Um nicht jeder Beleuchtungseinrichtung einen individuellen Zeitversatz zwischen dem Signal zur neuen Schlüsselgenerierung und dem Senden des neuen Schlüssels an den Schlüsselserver mitteilen zu müssen, kann vorgesehen sein, diesen Zeitversatz bei der Herstellung der Beleuchtungseinrichtung einzuprogrammieren. Alternativ kann eine jeweils für eine Beleuchtungseinrichtung fest vorgegebene individuelle Leuchten-ID beziehungsweise Herstellernummer als Grundlage zur Ermittlung eines individuellen Zeitversatzes verwendet werden.

Gemäß einer weiteren vorteilhaften Ausführungsform ist die zumindest eine Beleuchtungseinrichtung dazu ausgelegt, in Abhängigkeit von einem beleuchtungseinrichtungsinternen Zeitgeber einen individuellen lokalen zweiten Schlüssel zu erzeugen. Statt einer zentralen Aufforderung zur Schlüsselerzeugung kann somit eine lokale individuelle zufallsgesteuerte Schlüsselerzeugung erfolgen. Diese Zufallssteuerung kann über interne Zähler ausgelöst werden, die mit Zufallswerten starten. Die Zeitbasis kann so gewählt werden, dass eine Schlüsselerzeugung innerhalb von Stunden, Tagen oder Wochen erfolgen kann. Sobald ein neuer Schlüssel erzeugt wurde, kann dieser an den zentralen Schlüsselserver übermittelt werden. Solange der Schlüsselserver den Schlüssel noch nicht empfangen und zugeordnet hat, ist es vorteilhaft, wenn der alte Schlüssel temporär beibehalten wird, sodass die Datenbereitstellung unterbrechungsfrei sichergestellt wird. Auf dem Schlüsselserver sind alter und neuer Schlüssel bekannt und können somit für eine Anfrage sowohl bezüglich einer mit dem alten Schlüssel verschlüsselten Nachricht als auch mit einer mit dem neuen Schlüssel verschlüsselten Nachricht bereitgestellt werden.

Gemäß einer weiteren vorteilhaften Ausführungsform umfasst die zumindest eine Beleuchtungseinrichtung eine erste und eine zweite Beleuchtungseinrichtung, wobei der zentrale Schlüsselserver dazu ausgelegt ist, einen ersten Individualschlüssel zu erzeugen und derart über die Kommunikationsverbindung zu senden, dass der erste Individualschlüssel in dem für den ersten Schlüssel reservierten Speicherbereich der ersten Beleuchtungseinrichtung geschrieben wird, und einen zweiten Individualschlüssel zu erzeugen und derart über die Kommunikationsverbindung zu senden, dass der zweite Individualschlüssel in den für den ersten Schlüssel reservierten Speicherbereich der zweiten Beleuchtungseinrichtung geschrieben wird, wobei der zweite Individualschlüssel verschieden von dem ersten Individualschlüssel ist. In diesem Fall existiert nun für die Verteilung der Schlüssel nicht ein zentraler, für alle Beleuchtungseinrichtungen einheitlich gültiger Schlüssel, sondern für jede Beleuchtungseinrichtung ein individueller Schlüssel. Hierbei besteht die Notwendigkeit, die Schlüssel individuell zuzuordnen. Wichtig ist dabei, den richtigen Schlüssel der vorgesehenen Beleuchtungseinrichtung zu senden. Dies kann über eine Routing-Tabelle geschehen, wo alle Beleuchtungseinrichtungen lokal abgebildet sind. In dieser Routing-Tabelle sind die möglichen Kommunikationswege eingetragen, über die ein Schlüssel an die richtige Position gebracht werden kann.

Bevorzugt kann die Kommunikationsverbindung über ein Lichtmanagementsystem oder ein Gebäudemanagementsystem realisiert werden. Die Schnittstelle zu dem jeweiligen Lichtmanagementsystem beziehungsweise Gebäudemanagementsystem kann als Dali-Schnittstelle, ZigBee-Schnittstelle, WLAN-Schnittstelle, Bluetooth-Schnittstelle, KNX-Schnittstelle, LON-Schnittstelle oder Ethernet-Schnittstelle gegeben sein.

Gemäß einer weiteren vorteilhaften Ausführungsform umfasst die zumindest eine Beleuchtungseinrichtung eine Vielzahl von Beleuchtungseinrichtungen, insbesondere eine erste und eine zweite Beleuchtungseinrichtung, wobei die jeweiligen Sendeeinheiten der Vielzahl von Beleuchtungseinrichtungen als Sende-Empfangs-Einheiten zur bidirektionalen Kommunikation ausgelegt sind, und wobei die Vielzahl von Beleuchtungseinrichtungen dazu ausgelegt ist, gemeinsam über die jeweiligen Sende-Empfangs-Einheiten ein Maschennetzwerk zur Kommunikation der einzelnen Beleuchtungseinrichtungen der Vielzahl von Beleuchtungseinrichtungen untereinander zu betreiben. Auf diese Weise können die Beleuchtungseinrichtungen untereinander ein drahtloses Netzwerk (Mesh) aufbauen, wobei an einem Zugangspunkt in Form eines Gateways die Schlüsselbereitstellung erfolgen kann.

Die Erfindung geht weiterhin aus von einem Verfahren zum Betreiben einer Beleuchtungseinrichtung durch Kommunikation mit einem mobilen Endgerät. Erfindungsgemäß wird das Verfahren weitergebildet durch Speichern eines ersten Schlüssels in einem dafür reservierten Speicherbereich einer Datenspeichereinheit der Beleuchtungseinrichtung, dem Auslesen des ersten Schlüssels aus dem reservierten Speicherbereich, dem Umsetzen von Messwertedaten und/oder Identifikationsdaten, welche zur Übertragung an das mobile Endgerät bestimmt sind, gemäß einer vorgebbaren Verschlüsselungsoperation in eine mit dem ersten Schlüssel verschlüsselte Nachricht, und das Senden der verschlüsselten Nachricht an das mobile Endgerät durch eine Sendeeinheit der Beleuchtungseinrichtung. Das Verfahren ist insbesondere für Beleuchtungseinrichtungen vorteilhaft einsetzbar, welche nicht über einen während eines bestimmungsgemäßen Betriebs der Beleuchtungseinrichtung zugänglichen Rückkanal verfügen. Besonders vorteilhaft kann vorgesehen sein, dass der erste Schlüssel bereits bei der Herstellung der Beleuchtungseinrichtung in die Datenspeichereinheit der Beleuchtungseinrichtung programmiert wird. Insbesondere kann vorgesehen sein, dass der erste Schlüssel vor der Erstinbetriebnahme einen bestimmungsgemäßen Gebrauch der Beleuchtungseinrichtung erfolgt. Besonders bevorzugt kann vorgesehen sein, dass das Speichern des ersten Schlüssels vor einer Montage der Beleuchtungseinrichtung in einem Beleuchtungssystem, also der Anlageninstallation, erfolgt ist. Damit kann die Problematik umgangen werden, dass Licht zur Standard-Beleuchtung keinen direkten Rückkanal besitzt. Insofern lassen sich keine klassischen Verfahren einsetzen, die auf dem Prinzip der bidirektionalen Kommunikation beruhen.

Gemäß einer vorteilhaften Weiterbildung umfasst das Verfahren das Verwenden eines von einer Vielzahl von ersten Schlüsseln, welche der reservierte Speicherbereich umfasst, für die Verschlüsselungsoperation in Abhängigkeit von einem an die Beleuchtungseinrichtung bereitgestellten Schlüsselaktivierungssignal. Ein solches Schlüsselaktivierungssignal kann beispielsweise von einem zentralen Schlüsselserver über einen Kommunikationskanal bereitgestellt werden, beispielsweise über ein Netzwerk zur Lichtsteuerung. Das Schlüsselaktivierungssignal kann derart ausgebildet sein, dass es lediglich die Aufforderung zur Generierung eines neuen Schlüssels beinhaltet. Ebenso kann vorgesehen sein, dass das Schlüsselaktivierungssignal seinerseits bereits einen Schlüssel, insbesondere einen Generierungsschlüssel, umfasst, welcher dazu ausgelegt ist, mit einem bereits vorhandenen ersten Schlüssel auf der Beleuchtungseinrichtung gemäß einer vorgebbaren Generierungsvorschrift der Berechnung eines neuen ersten Schlüssels zugrundegelegt zu werden. Auf diese Weise kann mit der Übertragung eines einzigen einheitlichen zentralen Generierungsschlüssels eine Vielzahl von einzelnen individuellen Schlüsseln auf unterschiedlichen Beleuchtungseinrichtungen innerhalb eines Beleuchtungssystems erzeugt werden.

Gemäß einer weiteren vorteilhaften Ausführungsform umfasst das Verfahren ein Senden eines Schlüsselgenerierungssignals über eine Kommunikationsverbindung an die Beleuchtungseinrichtung durch einen Schlüsselserver, und in Abhängigkeit von dem über die Kommunikationsverbindung empfangenen Schlüsselgenerierungssignal Erzeugen eines lokalen Individualschlüssels durch die Beleuchtungseinrichtung zur Verwendung für die Verschlüsselungsoperation.

Die für die erfindungsgemäße Beleuchtungseinrichtung beschriebenen Vorteile und Merkmale sowie Ausführungsformen gelten gleichermaßen für entsprechende Verfahren und umgekehrt. Folglich können für Vorrichtungsmerkmale entsprechende Verfahrensmerkmale und umgekehrt vorgesehen sein.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile und Merkmale ergeben sich anhand der folgenden Beschreibung von Ausführungsbeispielen unter Berücksichtigung der beigefügten Figuren. In den Figuren bezeichnen gleiche Bezugszeichen gleiche Merkmale und Funktionen.

Es zeigen:
- Fig. 1: in vereinfachter schematischer Darstellung ein Beleuchtungssystems mit einer lokalen clientbasierten Entschlüsselung,
- Fig. 2: in vereinfachter schematischer Darstellung ein Beleuchtungssystem mit einem asymmetrischen Kryptosystem,
- Fig. 3: in vereinfachter schematischer Darstellung ein Beleuchtungssystem mit einer serverbasierten Entschlüsselung,
- Fig. 4: in vereinfachter schematischer Darstellung das Aufbringen und den Transport der Schlüssel gemäß einer ersten Ausführungsform der Erfindung für die Verwendung in einem Beleuchtungssystem,
- Fig. 5: in vereinfachter schematischer Darstellung eine beispielhafte Schlüsselverteilung über ein unter Nutzung einer Beacon-Funktionalität aufgebautes drahtloses Netzwerk zur Schlüsselverteilung gemäß einer zweiten Ausführungsform der Erfindung für die Verwendung in einem Beleuchtungssystem,
- Fig. 6: in schematischer Darstellung ein vereinfachtes Beispiel für eine symmetrische Verschlüsselung einer Leuchten-Identifikationsnummer und deren Entschlüsselung,
- Fig. 7: in vereinfachter schematischer Darstellung eine beispielhafte Zusammensetzung einer verschlüsselten Nachricht,
- Fig. 8: in vereinfachter schematischer Darstellung die Auswahl eines Schlüssels zur Verwendung in der Erfindung,
- Fig. 9: in vereinfachter schematischer Darstellung eine beispielhafte Bedeutungszuweisung der Signalisierungsbits für Rotation und Rotationsrichtung eines Schlüssels zur Verwendung mit der Erfindung,
- Fig. 10: in vereinfachter schematischer Darstellung die Erzeugung neuer Schlüssel durch bitweise Rotation eines vorhandenen Schlüssels zur Verwendung mit der Erfindung, und
- Fig. 11: in vereinfachter schematischer Darstellung die Erzeugung eines neuen Schlüssels aus zwei vorhandenen Schlüsseln zum Einsatz mit der Erfindung.

Ein Beleuchtungssystem 100 umfasst zumindest eine Leuchte 12 beispielsweise in Form einer Deckenleuchte. Die Leuchte 12 umfasst ein Leuchtmittel 13. Weiterhin umfasst das Beleuchtungssystem 100 ein mobiles Endgerät 14.

Das Beleuchtungssystem 100 kann des Weiteren unabhängig voneinander und in beliebiger Kombination mindestens eine der nachfolgenden Komponenten aufweisen: eine Bake 16, einen WLAN-Router 18 sowie eine Servereinheit 20. Eine Bake 16, welche in einer direkten Datenverbindung mit der Leuchte 12 steht, wird ebenso wie das Leuchtmittel 13 und ein zugehöriges Betriebsgerät (Treiber) als Teil der jeweiligen Beleuchtungseinrichtung betrachtet.

Das Leuchtmittel 13 kann zur lichtbasierten Kommunikation ausgelegt sein. Diese ist beispielsweise für die Navigation im Innenraum von Gebäuden, sogenannte Indoor-Navigation, geeignet. Lichtbasierte Indoor-Navigation beruht auf der Aussendung einer Licht-ID (LID), die mithilfe des mobilen Endgeräts 14 empfangen und detektiert werden kann. Die Licht-ID wird hierzu in den Lichtstrom - unsichtbar für das menschliche Auge - aufmoduliert. Um das Signal mit dem mobilen Endgerät 14 zu detektieren, muss eine Sichtverbindung (line-of-sight) zwischen dem Detektor, beispielsweise einer Kamera des mobilen Endgeräts 14, und dem Leuchtmittel 13 bestehen, welches die modulierte Lichtquelle darstellt. Die Licht-ID wird von dem mobilen Endgerät 14 wieder aus dem Licht herausgefiltert und demoduliert.

Der Erfindung liegt die weitere Erkenntnis zugrunde, dass Sendeeinheiten, welche zur lokalen Abstrahlung von Signalen, welche ortsspezifische Messwertedaten und/oder Identifikationsdaten beinhalten, vielfach keinen Rückkanal aufweisen, wie es bei der lichtbasierten Kommunikation über das Leuchtmittel 13 der Fall ist, wodurch Verschlüsselungen, die auf bidirektionaler Kommunikation beruhen, nicht einsetzbar sind.

Die Licht-ID selbst kann direkt eine Positionsinformation der Lichtquelle beinhalten oder aber indirekt über eine Look-up-Tabelle ermittelt werden. Hierzu findet in der Look-up-Tabelle eine Zuordnung von Licht-ID und Positionsinformationen der Lichtquelle statt. Um die Positionsgenauigkeit weiter zu erhöhen, kann eine optische Auswertung über einen Bildsensor (Kamera) durchgeführt werden. Hierzu werden die unterschiedlichen Winkel ermittelt, unter welchen der Bildsensor die verschiedenen Licht-IDs empfängt. Aus drei verschiedenen Licht-IDs lässt sich somit im Raum über Triangulation eine eindeutige Position ermitteln. Die eigene Lage des Empfängers, beispielsweise der Kamera, in dem mobilen Endgerät 14 wird in dem Empfänger mittels Sensoren (3D-Beschleunigungssensoren) ermittelt, um die eigene Lage zu detektieren und einen daraus resultierenden lageabhängigen Fehler in der Positionsermittlung zu kompensieren.

Neben der Positionsinformation können beliebige weitere Meta-Daten, beispielsweise ortsspezifische Messwertedaten, welche von der Leuchte 12 bereitgestellt werden, mit der Licht-ID verknüpft werden. Die Look-up-Tabelle kann als integrierter Teil in einer Anwendung hinterlegt sein, welche auf dem mobilen Endgerät 14 abläuft, oder aber auf der externen Serverreinheit 20 hinterlegt sein, auf welche das mobile Endgerät 14 zugreift.

Umgekehrt kann die Look-up-Tabelle auch dynamische Informationen aufnehmen, beispielsweise welches mobile Endgerät 14 welche Positionsinformationen abgefragt hat. Somit lässt sich ein dynamisches Bewegungsprofil aufzeichnen (tracking) und mit einem Zeitstempel abspeichern (tracing). Diese Bewegungsinformationen bilden die Grundlage für verschiedenste ortsbezogene Dienste und Analysen.

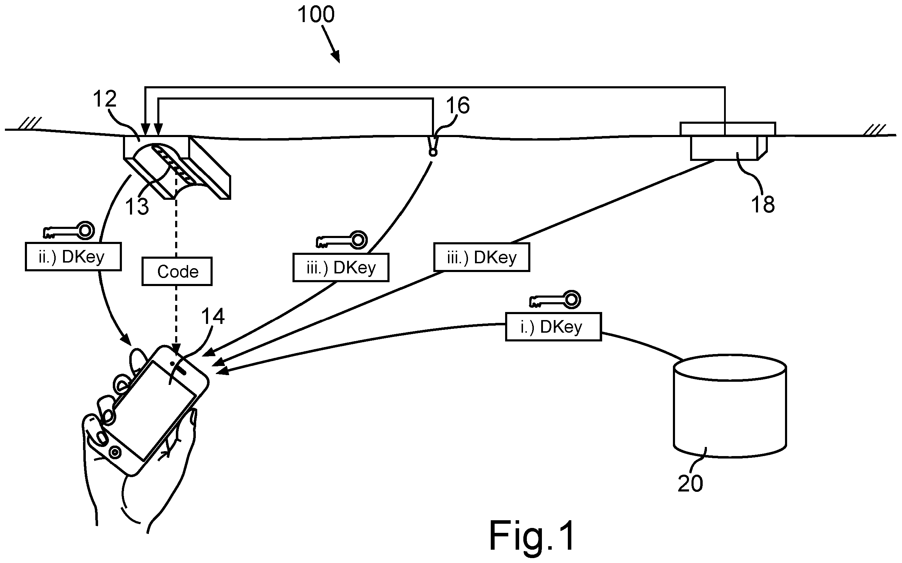

Es gibt verschiedene drahtlose funkbasierte Systeme wie WLAN oder Bluetooth, die für eine Indoor-Positionsbestimmung verwendet werden können. Hierbei ist zum einen die Position des Senders (WLAN Access Point) in der Fig. 1 als optionaler WLAN-Router 18 dargestellt oder einer Bake 16 - bei Bluetooth-basierten Funksystemen auch als Beacon bezeichnet - bekannt und anhand der Signalfeldstärke des empfangenen Signals (received signal strength, RSSI) kann der Abstand zwischen Sender und mobilem Empfänger abgeschätzt werden. Für eine eindeutige Positionsbestimmung werden mindestens drei verschiedene Sendequellen benötigt (Trilateration).

Erschwerend tritt hinzu, dass die Licht-ID , welche also beispielsweise eine Identifikationsnummer einer Leuchte sein kann, stets einen statischen Wert annimmt. Das gleiche gilt für (Sende-)Baken 16 (Beacons), was der Einfachheit halber nachfolgend am Beispiel einer Leuchten-ID (im Folgenden synonym mit Licht-ID verwendet) und der zugehörigen Verschlüsselung beschrieben wird. Wird eine feste Leuchten-ID mit einem festen Verschlüsselungsschlüssel EKey verschlüsselt, entsteht wieder eine feststehende Code-Sequenz, nämlich die verschlüsselte Nachricht Code. Diese feste Code-Sequenz kann ebenfalls als Pseudo-ID genutzt werden. Ohne die eigentliche dahinterliegende Leuchten-ID zu kennen, lässt sich ein Pseudo-ID-basiertes Positionsbestimmungssystem aufbauen.

Gemäß der Erfindung wird nun in dem Beleuchtungssystem 100 die Licht-ID nicht statisch offen übertragen, sondern verschlüsselt. Eine besondere Herausforderung besteht darin, dass Licht zur Standard-Beleuchtung keinen direkten Rückkanal besitzt. Insofern lassen sich klassische Verfahren nicht einsetzen, die auf dem Prinzip der bidirektionalen Kommunikation beruhen. In der Fig. 1 sind verschiedene Wege dargestellt, wie ein Entschlüsselungsschlüssel DKey zur Entschlüsselung einer verschlüsselten Nachricht Code, welcher über das Leuchtmittel 13 auf dem Wege einer lichtbasierten Kommunikation bereitgestellt wird, bezogen werden kann.

Zur Verhinderung einer unberechtigten Mitbenutzung können wechselnde Verschlüsselungsschlüssel EKey verwendet werden. So verändert sich das die verschlüsselte Nachricht Code transportierende Signal mit jedem neuen Verschlüsselungsschlüssel EKey. Wird der Verschlüsselungsschlüssel EKey beispielsweise wöchentlich verändert, so lohnt es sich für einen unberechtigten Mitbenutzer nicht, seine parasitäre Applikation immer wieder neu auf die neuen Pseudo-IDs umzustellen. Zu diesem Zweck kann vorgesehen sein, eine Reihe von Verschlüsselungsschlüsseln EKey[1...m] in dem Beleuchtungssystem 100 vorzuhalten, die dann nach einem vorgegebenen Muster verwendet werden. Der jeweils aktive Verschlüsselungsschlüssel EKey[n] und das Muster sind dann auf Sende- und Empfangsseite synchron zu halten.

Bei Anwendung von symmetrischen Kryptographieverfahren sind der erste Schlüssel, das heißt der Verschlüsselungsschlüssel EKey, und der zweite Schlüssel, das heißt der Entschlüsselungsschlüssel DKey, identisch.

Nachfolgend wird eine Abhängigkeit des Verschlüsselungsschlüssels EKey vom Ort durch Ekey[loc] gekennzeichnet, eine Abhängigkeit des Verschlüsselungsschlüssels EKey von der Zeit durch Ekey[temp], und eine Abhängigkeit von sowohl von der Zeit als auch vom Ort EKey[temp,loc]. So kennzeichnet beispielsweise EKey[n,loc] einen jeweils aktuell aktivierten und für die Verschlüsselungsoperation verwendeten Verschlüsselungsschlüssel der jeweiligen lokalen Beleuchtungseinrichtungen, welche gemeinsam denselben Schlüssel benutzen, also im Extremfall jeweils einer einzigen Beleuchtungseinrichtung, wenn alle Beleuchtungseinrichtungen innerhalb des Beleuchtungssystems eigene Schlüssel verwenden. In letzterem Fall repräsentiert loc einen Laufindex von 1 bis Anzahl der einzelnen Beleuchtungseinrichtungen in dem Beleuchtungssystem.

Ein Verschlüsselungsschlüssel EKey[n-1,loc] kennzeichnet einen Schlüssel, der vor dem Verschlüsselungsschlüssel EKey[n,loc] aktiv war und durch letzteren ersetzt wurde. In gleicher Weise beschreibt EKey[n+1,loc] einen Verschlüsselungsschlüssel, der noch nicht aktiviert ist, aber dazu bestimmt ist, an die Stelle des aktuellen Verschlüsselungsschlüssels EKey[n,loc] zu treten.

Dasselbe gilt entsprechend für Entschlüsselungsschlüssel DKey, welche - sofern nicht ohnehin identisch bei Verwendung einer symmetrischen Verschlüsselung - zu dem jeweiligen Verschlüsselungsschlüssel EKey passend zuzuordnen sind.

Für eine clientseitige Entschlüsselung, also eine Entschlüsselung auf dem mobilen Endgerät 14, benötigt das mobile Endgerät 14 den Entschlüsselungsschlüssel DKey, um die verschlüsselte Nachricht Code zu entschlüsseln. Der Entschlüsselungsschlüssel DKey kann hierzu bereits ein Teil der Anwendung sein, die auf dem mobilen Endgerät beispielsweise als Smartphone-App ausgeführt wird.

Alternativ kann der Entschlüsselungsschlüssel DKey dem mobilen Endgerät 14 beziehungsweise der darauf ablaufenden Anwendung während des Betriebs bereitgestellt werden. Die Bereitstellung des Entschlüsselungsschlüssels DKey kann i.) über eine externe Servereinheit 20 erfolgen, wobei wahlweise ein lokal gültiger Entschlüsselungsschlüssel DKey[loc], der für jede Leuchte 12 individuell zugewiesen wird, oder ein globaler Entschlüsselungsschlüssel DKey, der für alle Leuchten 12 innerhalb des Beleuchtungssystems 100 gleich, aber gegebenenfalls nur zeitlich begrenzt gültig ist, erfolgen. Gemäß ii.) kann der Entschlüsselungsschlüssel DKey über die Leuchte 12 selbst zur Verfügung gestellt werden. Zusätzlich oder alternativ kann gemäß iii.) über eine lokale Informationsquelle der Entschlüsselungsschlüssel DKey zur Verfügung gestellt werden, beispielsweise über die Bake 16 oder über den WLAN-Router 18.

Bevorzugt kann vorgesehen sein, dass ein jeweils lokal zur Verfügung gestellter Schlüssel auch nur lokale Gültigkeit hat. Die Bereitstellung des Entschlüsselungsschlüssels DKey erfolgt nur nach vorangegangener Authentifizierung des mobilen Endgeräts 14 und zeitlich begrenzt. Der Entschlüsselungsschlüssel DKey wird über sichere Verbindungen, beispielsweise Bluetooth oder WLAN, übertragen.

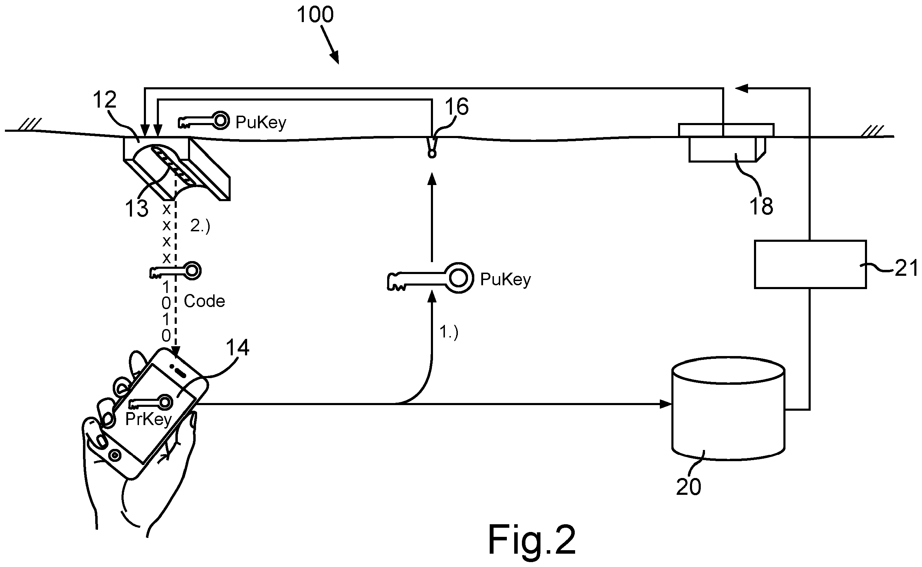

Die Verschlüsselung kann auch gemäß der Darstellung in Fig. 2 individuell pro mobilem Endgerät 14 erfolgen. Hierzu erzeugt das mobile Endgerät 14 ein Schlüsselpaar bestehend aus einem öffentlichen Schlüssel PuKey und einen privaten Schlüssel PrKey, wobei in einem ersten Schritt der öffentliche Schlüssel PuKey an die Leuchte 12 übertragen wird. Der öffentliche Schlüssel PuKey kann beispielsweise über die Bake 16, den WLAN-Router 18 oder die Servereinheit 20 an die Leuchte 12 übertragen werden. Von der Leuchte 12 werden die Identifikationsdaten ID verschlüsselt und mittels des Leuchtmittels 13 gesendet, sodass nur das mobile Endgerät 14, welches den zugehörigen privaten Schlüssel PrKey besitzt, diese Identifikationsdaten ID wieder entschlüsseln kann.

Eine Datenverbindung zwischen der Servereinheit 20 und der Leuchte 12 ist gemäß der Darstellung in der Fig. 2 über ein Lichtmanagementsystem beziehungsweise Gebäudemanagementsystem 21 gegeben.

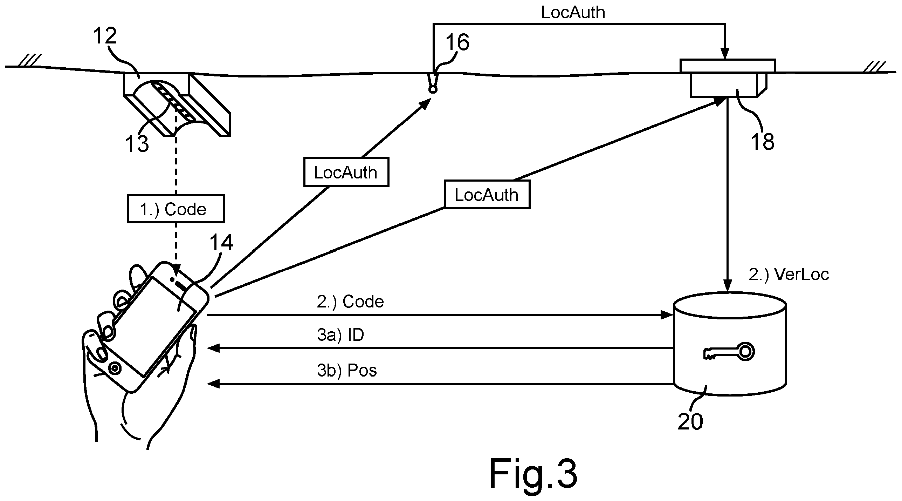

Eine serverseitige Entschlüsselung und Rückübertragung zu dem mobilen Endgerät 14 ist in der Fig. 3 dargestellt. Die verschlüsselte Nachricht Code wird zu der Servereinheit 20 übertragen und dort entschlüsselt. Von dort werden die aus der verschlüsselten Nachricht Code gewonnen Identifikationsdaten ID zurück zu dem mobilen Endgerät 14 übertragen. Dies hat den Vorteil, dass die Verschlüsselung beliebig verändert werden kann und der Entschlüsselungsschlüssel DKey nicht auf viele lokale Endgeräte 14 oder andere vergleichbare Clients übertragen werden muss, was somit ein sichereres System darstellt. Die Identifikationsdaten ID können vor Ort für die Freischaltung von weiteren Dienstleistungen wie beispielsweise einer Lichtsteuerung verwendet werden.

Um die Sicherheit weiter zu erhöhen, kann eine "lokale Authentifizierung" stattfinden. Hier kann durch weitere lokale Signale und Informationsquellen sichergestellt werden, dass die Anfragen an die Servereinheit 20 mit den lokalen Identifikationsdaten ID tatsächlich vor Ort erfolgt und kein Auslesen der Daten von Dritten beispielsweise durch automatisierte Abfragen erfolgt. Eine lokale Authentifizierung LocAuth kann beispielsweise dadurch erfolgen, dass über die Bake 16 oder den WLAN-Router 18 eine Ortsverifikation VerLoc bei der Servereinheit 20 vorgenommen wird.

Bei einer serverseitigen Entschlüsselung der verschlüsselten Nachricht Code können auch direkt Positionsinformationen Pos zu dem mobilen Endgerät 14 zurückgesendet werden. Die verschlüsselte Nachricht Code wird hierzu auf die Servereinheit 20 übertragen und dort mittels des Entschlüsselungsschlüssels DKey entschlüsselt. Weiterhin erfolgt dort auch die Umsetzung der Identifikationsdaten ID in die Positionsinformation Pos, wobei die Positionsinformationen Pos auch für beliebig andere Daten, welche eindeutig den Identifikationsdaten ID zugeordnet werden können, repräsentieren. Somit können die Positionsdaten Pos stellvertretend für beliebig weitere der Leuchte 12 zuordenbare Daten betrachtet werden. Die Positionsdaten Pos (oder weitere der Leuchte 12 zuordenbare Daten) werden dann zurück an das mobile Endgerät 14 übertragen. Vorteil dieser Ausführung ist, dass auf der Seite des mobilen Endgeräts 14 kein Zusammenhang zwischen der verschlüsselten Nachricht Code und den unverschlüsselten Identifikationsdaten ID hergestellt werden kann, da nur die verschlüsselte Nachricht Code dem mobilen Endgerät 14 bekannt ist.

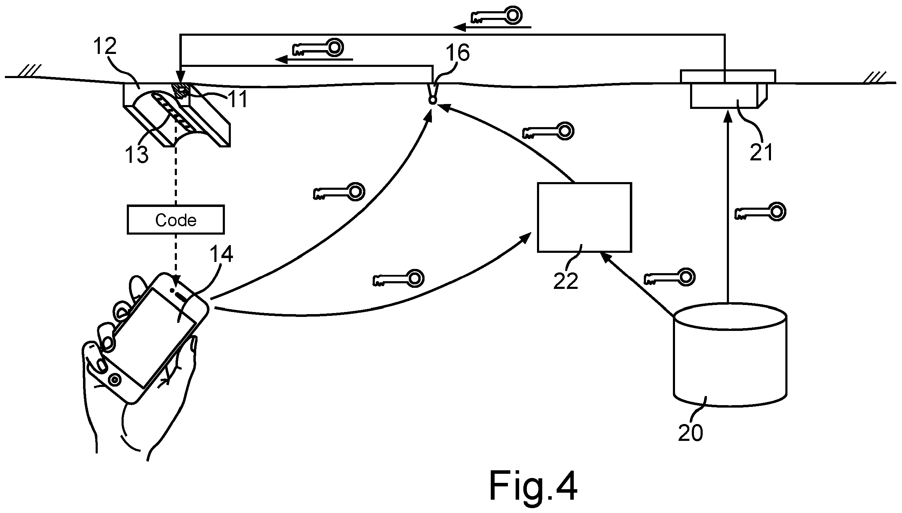

Die Übertragung eines Verschlüsselungsschlüssels EKey in eine Leuchte 12 ist in der Fig. 4 dargestellt. Die Übertragung des Verschlüsselungsschlüssels EKey kann beispielsweise in der Produktion der jeweiligen Leuchte 12, also statisch, erfolgen. Die Abspeicherung eines oder mehrerer lokaler Verschlüsselungsschlüssel EKey in einer Leuchte 12 beziehungsweise in einem Treiber 11 (Betriebsgerät) einer Leuchte 12 kann bereits während der Produktion erfolgen. Insbesondere kann die Übertragung des lokalen Verschlüsselungsschlüssels EKey gemeinsam mit dem Programmieren einer Leuchten-ID in Form der Identifikationsdaten ID erfolgen. Anhand der Identifikationsdaten ID kann bei der Inbetriebnahme und Lokalisierung einer Leuchte 12 an einer bestimmten Position auch die Schlüsselzuordnung erfolgen.

Während des Betriebs einer Leuchte 12 in einem Beleuchtungssystem 100 kann die Übertragung eines Verschlüsselungsschlüssels EKey auch dynamisch erfolgen. Während des Betriebs lassen sich neue Verschlüsselungsschlüssel EKey in den Treiber 11 der Leuchte 12 einspielen. Dabei kann die Einspielung manuell über eine drahtgebundene oder drahtlose Schnittstelle stattfinden.

Hierzu eignet sich auch in besonderer Weise ein bereits bestehendes Netzwerk zur Lichtsteuerung, da hierfür in der Regel nur geringe Daten notwendig sind und es sich um ein nicht öffentlich zugängliches Netzwerk handelt. Dieses Netzwerk zur Lichtsteuerung ist über ein Gebäudebeziehungsweise Lichtmanagementsystem 21 bei entsprechender Autorisierung zugänglich. Beispielsweise kann die Servereinheit 20 als Schlüsselserver auf das Gebäudebeziehungsweise Lichtmanagementsystem 21 zugreifen.

Auch funkbasierte Sende- und Empfangseinheiten, die mit dem Treiber 11 verbunden sind, beispielsweise die Bake 16, die in diesem Fall zweckmäßigerweise für bidirektionale Funkübertragungen ausgelegt ist, können für das Einspielen der Verschlüsselungsschlüssel EKey dienen. Hier bieten sich Baken oder Beacons an, die mit dem Leuchten-Treiber 11 verbunden sind. Diese lassen sich auch als Empfänger für Daten verwenden und somit auch als Datenpfad für die Schlüsselverteilung nutzen. Die Sende-Empfangs-Einheiten in Form der bidirektional arbeitenden Baken 16 können untereinander ein drahtloses Netzwerk (Mesh) aufbauen, sodass an nur einem Zugangspunkt dieses drahtlosen Netzwerkes ein Gateway 22 vorgesehen ist, an welchem die Verschlüsselungsschlüssel EKey eingespielt werden können.

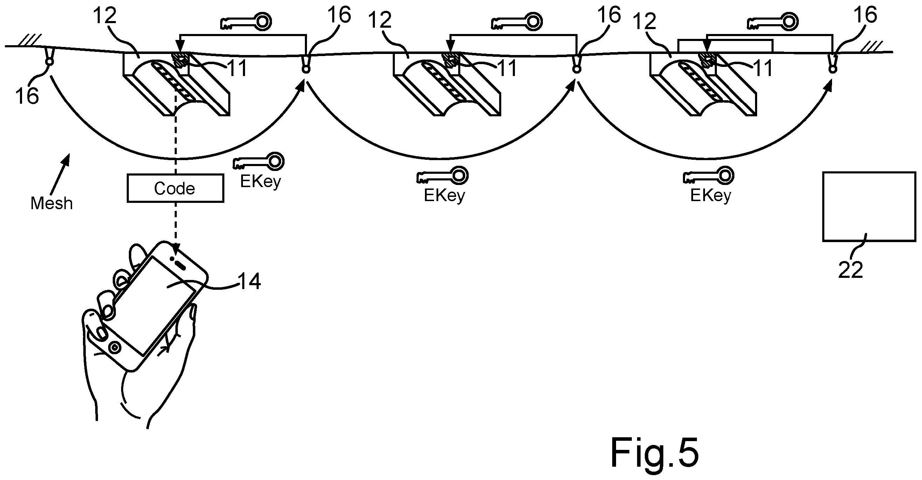

In der Fig. 5 sind mehrere Leuchten 12 sowie mehrere Baken 16 dargestellt, die ein drahtloses Kommunikationsnetzwerk bilden. Ein solches Netzwerk wird als Maschennetz Mesh bezeichnet. Für den Zugang zu diesem drahtlosen Kommunikationsnetzwerk ist das Gateway 22 vorgesehen. Die Verteilung der Entschlüsselungsschlüssel DKey an die verschiedenen Leuchten 12 erfolgt hierbei entsprechend der Vermaschung des Netzes jeweils von einer Bake 16 zu einer im Maschennetz folgenden Bake 16.

Die Verschlüsselungsschlüssel EKey können von einer Servereinheit 20 an das lokale Gateway 22 übertragen werden oder über das mobile Endgerät 14 an das Gateway 22 übertragen werden.

Ebenso kann auch vorgesehen sein, den Verschlüsselungsschlüssel EKey in eine Sende-Empfangs-Einheit, beispielsweise in eine bidirektional betreibbare Bake 16, zu übertragen. Auch derartige Sende-Empfangs- Einheiten können statische Identifikationsdaten ID aussenden, die nicht geschützt sind. Um die Identifikationsdaten ID auch bei diesen Sende-Empfangs-Einheiten zu schützen, kann die gleiche Methode zur Schlüsselverteilung verwendet werden. Nur wird hierzu der Entschlüsselungsschlüssel DKey nicht an die Leuchte 12 weitergereicht, sondern direkt von den Sende-Empfangs-Einheiten (Bake 16) verwendet.

Falls nicht ein zentraler, für alle Leuchten 12 und/oder Sende-Empfangs-Einheiten einheitlich gültiger Verschlüsselungsschlüssel EKey verwendet werden soll ist, sondern für jede Leuchte 12 / Sende-Empfangs-Einheit individuelle Verschlüsselungsschlüssel EKey verteilt werden sollen, kann für die Adressierung der Entschlüsselungsschlüssel DKey bei der Verteilung vorgesehen sein, die Schlüssel individuell zuzuordnen, wie in der Fig. 2 dargestellt. Hierbei ist es wichtig, den richtigen Verschlüsselungsschlüssel EKey der vorgesehenen Leuchte 12 beziehungsweise den Sende-Empfangs-Einheiten (welche im Übrigen als Teil derjenigen Beleuchtungseinrichtung betrachtet werden, mit der sie in direkter Kommunikationsverbindung stehen) zu senden. Dies kann über eine Routing-Tabelle geschehen, wo alle Leuchten 12 beziehungsweise Sende-Empfangs-Einheiten lokal abgebildet sind. In dieser Routing-Tabelle sind die möglichen Kommunikationswege eingezeichnet, über die ein Verschlüsselungsschlüssel EKey an die richtige Position gebracht werden kann. Die Synchronisierung der Schlüsselauswahl und Abfolge kann durch eine zeitliche Synchronisierung erreicht werden, wofür eine einheitliche Zeitbasis auf beiden Seiten erforderlich ist, was den Nachteil aufweist, dass beide Komponenten (Sender und Empfänger) einen synchronen Taktgeber benötigen, was einen nicht unerheblichen Aufwand bedeutet.

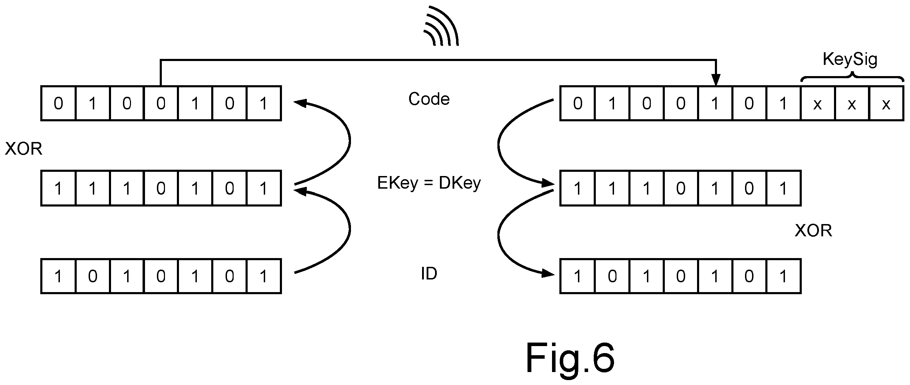

Die Synchronisierung der Schlüssel kann vorteilhaft über den Datenstrom der verschlüsselten Nachricht Code selbst erfolgen. Hierzu werden neben den eigentlichen verschlüsselten Identifikationsdaten ID weitere Signalisierungsbits x in einer Signalisierungsbitfolge KeySig der verschlüsselten Nachricht Code verwendet, wie in der Fig. 6 dargestellt. Über diese Signalisierungsbits x kann dem Empfänger mitgeteilt werden, welcher der jeweiligen Entschlüsselungsschlüssel DKey[1...m] zur Entschlüsselung verwendet werden muss.

Gemäß der Darstellung in der Fig. 6 kann eine Leuchten-ID mit dem binären Wert 1010101 durch einen Verschlüsselungsschlüssel EKey mit dem binären Wert 1110000 mittels einer XOR-Operation zu dem binären Wert 0100101 codiert werden. Dem codierten Wert wird außerdem noch eine Signalisierungsbitfolge KeySig bestehend aus drei Signalisierungsbits x angehängt, mittels derer der Empfänger erkennen kann, welchen Schlüssel er zur Entschlüsselung der Nachricht Code anwenden muss. In dem dargestellten Beispiel handelt es sich um eine Form der symmetrischen Verschlüsselung, bei der der Verschlüsselungsschlüssel EKey gleich dem Entschlüsselungsschlüssel DKey ist. Durch die bitweise Anwendung eines XOR-Operators auf die Nachricht Code und den Entschlüsselungsschlüssels DKey ergibt sich wiederum die ursprüngliche Leuchten-ID L-ID.

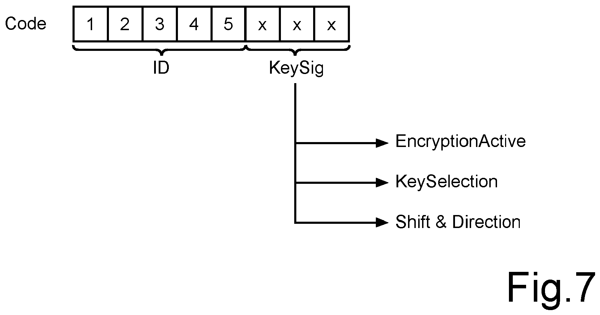

Fig. 7 zeigt beispielhaft, welche Informationen mittels einer Signalisierungsbitfolge KeySig an einen Empfänger der verschlüsselten Nachricht Code bereitgestellt werden können. Beispielsweise kann die Bitfolge signalisieren, dass eine Verschlüsselung aktiv ist (EncryptionActive), einen der aktuellen Verschlüsselung zugrundeliegenden Schlüssel aus einem Pool von zur Verfügung stehenden Schlüsseln zu referenzieren (KeySelection), sowie eine mögliche Verschiebung des jeweiligen Ausgangsschlüssels durch eine bitweise Rotation in eine vorgebbare Anzahl Bits mit vorgebbarer Richtung anzuzeigen (Shift&Direction).

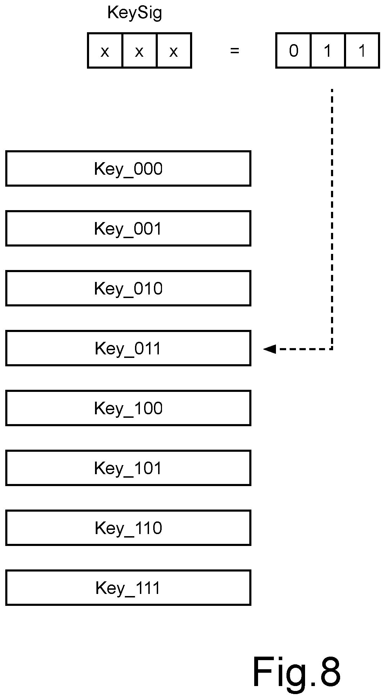

Fig. 8 zeigt die Möglichkeit, aus einem Pool vorgegebener Schlüssel Key_000, Key_001, Key_010, Key_011 ... Key_111 in Abhängigkeit von der Signalisierungsbitfolge KeySig den jeweiligen Schlüssel auszuwählen. Bei einer Anzahl N = 3 der Signalisierungsbits x ergibt sich somit über 2^{N} = 8 mögliche Schlüssel.

Weiterhin kann die Generierung eines eindeutigen Verschlüsselungsschlüssels EKey jeweils in der lokalen Leuchte 12, insbesondere in deren Treiber 11, beziehungsweise in der jeweiligen lokalen Sende-Empfangs-Einheit, stellvertretend in der Fig. 5 dargestellt durch die Baken 16, erfolgen. Werden die Verschlüsselungsschlüssel EKey[loc] lokal erzeugt und diese erzeugten individuell lokalen Verschlüsselungsschlüssel EKey[loc] an die Servereinheit 20 zur Verwaltung übermittelt, entsteht eine wesentlich geringere Komplexität, da es nur einen Empfänger gibt und somit keine Routing-Tabelle erzeugt und gepflegt werden muss. Jede Leuchte 12 sendet hierzu ihren eigenen individuell erzeugten Verschlüsselungsschlüssel EKey[loc] zusammen mit den jeweils festen Identifikationsdaten ID aus, die der Leuchte 12 zugeordnet wurden. Anstatt der Identifikationsdaten ID kann auch die genaue lokale Position der Leuchte 12 übermittelt werden, wo dieser Schlüssel zum Einsatz kommt. So wird auf der Servereinheit 20 eine Tabelle aufgebaut, welche die lokalen Schlüssel und die individuellen Identifikationsdaten ID beziehungsweise die Position der Leuchte 12 / der Bake 16 (Sende-Empfangs-Einheit) enthält.

Um das Beleuchtungssystem 100 noch besser zu schützen, kann die Schlüsselgenerierung von der Servereinheit 20 ausgelöst werden. Hierzu wird ein Signal an alle Baken 16 / Leuchten 12 / Sende-Empfangs-Einheiten gesendet, wie in der Fig. 5 dargestellt. Idealerweise wird dieser Prozess in Zeiten ausgeführt, wo das Beleuchtungssystem 100 nicht im Einsatz ist beziehungsweise kein oder nur ein geringes Datenaufkommen herrscht, beispielsweise nachts. Somit wechselt auf der Seite der Servereinheit 20 jeweils nur einmal der Verschlüsselungsschlüssel EKey[temp], während die Leuchten 12 beziehungsweise die Baken 16 dann lokal jeweils einen unabhängigen Verschlüsselungsschlüssel EKey[temp,loc] daraus erzeugen.

Um die Datenmenge zu verteilen, die bei der Rückmeldung der neuen Verschlüsselungsschlüssel EKey entsteht, kann ein individueller zeitlicher Versatz definiert werden. Um nicht jeder Einheit, also den in dem Maschennetz Mesh eingebundenen Komponenten in Form der Leuchte 12, Baken 16 sowie sonstige Sende-Empfangs-Einheiten wie WLAN-Router 18, welche jeweils über einen eigenen Schlüsselgenerator verfügen, einen individuellen Zeitversatz zwischen dem Signal zur neuen Schlüsselgenerierung und dem Senden der neuen Verschlüsselungsschlüssel EKey an die Servereinheit 20 mitteilen zu müssen, was einen erheblichen Adressierungs- und Kommunikationsaufwand bedeutet, kann dieser Zeitversatz bei der Herstellung der jeweiligen Geräte einprogrammiert werden.

Alternativ oder zusätzlich kann eine fest abgelegte individuelle Identifikationsnummer beziehungsweise Herstellernummer als Offset/Zeitversatz verwendet werden. An dem Netzwerk wechseln somit nicht alle Teilnehmer gleichzeitig den Verschlüsselungsschlüssel EKey, sondern schalten diesen zeitversetzt gültig und übermitteln ihn dann. Die Erzeugung und die Aktivierung des Schlüssels können somit getrennt vorgenommen werden.

Die Anzahl N der Signalisierungsbits x bestimmt die Anzahl der möglichen Schlüssel m = 2^{N}. Bei N = 8 ergibt sich eine Auswahl von m=256 verschiedenen Schlüsseln, oder bei N = 3 wie in der Fig. 8 dargestellt m = 8. Um die Anzahl der Schlüssel weiter zu erhöhen, aber die Anzahl der Signalisierungsbits x nicht weiter ansteigen zu lassen oder den Adressraum für die eigentliche Identifikationsdaten ID nicht weiter zu verringern, können auch ganze Gruppen von Schlüsseln verwendet werden, die über die Signalisierungsbits x adressiert werden. Bei der Verwendung von 256 Gruppen mit jeweils 100 Schlüsseln ergeben sich somit 25.600 verschiedene Schlüssel. Bei einer Übertragungsrate von 100 Millisekunden je verschlüsselter Identifikationsdaten ID würde sich also ein Schlüssel alle 2.560 Sekunden beziehungsweise nach circa 42 Minuten wiederholen, sodass ein Auslesen entsprechend lange dauern würde.

Um den Schutz des Beleuchtungssystems 100 noch weiter zu erhöhen, kann anstatt einer zentralen Aufforderung zur Schlüsselerzeugung auch eine lokale individuelle zufallsgesteuerte Schlüsselerzeugung erfolgen. Diese Zufallssteuerung kann über interne Zähler ausgelöst werden, die mit Zufallswerten starten. Die Zeitbasis kann so gewählt werden, dass eine Schlüsselerzeugung innerhalb von Stunden, Tagen oder Wochen erfolgen kann. Sobald ein neuer lokaler Verschlüsselungsschlüssel EKey[n+1,loc] erzeugt wird, wird dieser an die Servereinheit 20 übermittelt.

Solange die Servereinheit 20 den neuen individuellen Verschlüsselungsschlüssel EKey[n,loc], mit anderen Worten einen individuellen lokalen zweiten Schlüssel, noch nicht empfangen und zugeordnet hat, ist es vorteilhaft, wenn der alte Verschlüsselungsschlüssel EKey[n-1,loc], mit anderen Worten der bisherige erste Schlüssel, temporär beibehalten wird, sodass der Dienst unterbrechungsfrei sichergestellt wird. Auf der Servereinheit 20 sind alter und neuer Verschlüsselungsschlüssel EKey[n-1,loc], EKey[n,loc] bekannt und können somit beispielsweise sowohl eine alte als auch eine neue Abfrage der Identifikationsdaten ID beantworten.

Zur Detektion und Lokalisierung von unerlaubten Serviceabfragen beziehungsweise Positionsabfragen können auf der Servereinheit 20 die "alten" Verschlüsselungsschlüssel EKey[n-1,loc], EKey[n-2,loc], EKey[n-2,loc] etc. weiter abgespeichert werden, sodass eine Schlüsselhistorie entsteht. Erfolgt nun eine Abfrage von Identifikationsdaten ID, welche mit einem veralteten Verschlüsselungsschlüssel EKey[n-2,loc] verschlüsselt wurde, ist dies ein Hinweis darauf, dass es sich hierbei um einen nicht authentifizierten Zugriff handelt. Hierdurch lassen sich weitere Maßnahmen ableiten, beispielsweise eine gezielte Deaktivierung einer eventuell veralteten App auf dem mobilen Endgerät 14, welche Verschlüsselung noch nicht unterstützt, oder das Anbieten einer neuen App-Version. Ebenso kann eine Lokalisierung des mobilen Endgeräts 14 vorgenommen werden, welches die nicht authentifizierten Zugriffe durchführt.

Alternativ oder zusätzlich können die Signalisierungsbits x über einen weiteren Kanal lokal verteilt werden, beispielsweise über eine mit dem jeweiligen Treiber 11 einer Leuchte 12 verbundenen Bake 16 (Beacon) oder über einen Mobilfunkkanal zwischen der Servereinheit 20 beziehungsweise dem mobilen Endgerät 14 und der Leuchte 12.

Der Aufwand, auf ein solches Beleuchtungssystem 100 zugreifen zu können ohne die Kenntnis der Entschlüsselungsschlüssel DKey, kann weiter erhöht werden, wenn die Gültigkeit von Entschlüsselungsschlüsseln DKey in eine lokale Abhängigkeit gesetzt werden, das heißt ein bestimmter Satz an Entschlüsselungsschlüsseln DKey[loc] nur für Teile des Beleuchtungssystems 100 innerhalb eines bestimmten Raumes gültig ist. So kann über eine Bake 16 (Beacon) eine grobe Lokalisierung erfolgen. Hieraus kann abgeleitet werden, welcher Entschlüsselungsschlüssel DKey[loc] in diesem Bereich gültig ist.

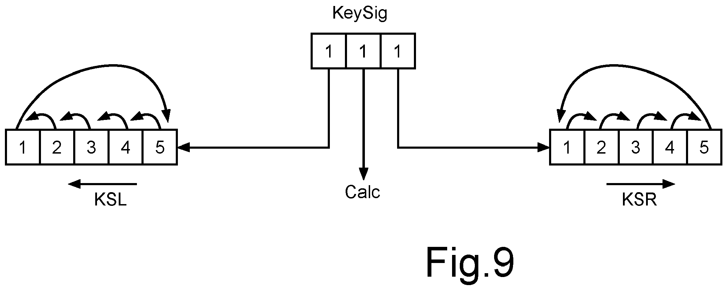

Um die Zugriffsmöglichkeiten auf eine statische Leuchten-ID durch statische Verschlüsselungsschlüssel EKey - insbesondere bei einer symmetrischen Verschlüsselung - einzuschränken, kann neben der Erhöhung der Anzahl N der Schlüssel und Rotation dieser Schlüssel auch der Schlüssel selbst wie in der Fig. 9 dargestellt rotieren. Die Länge des Schlüssels und die Anzahl und Art der Schlüsselverschiebungen bestimmen dabei den zusätzlichen Verschlüsselungsraum. Unter der Annahme, dass die Länge der Identifikationsdaten ID 10 Bit und die Länge des Schlüssels ebenfalls 10 Bit beträgt, so wiederholt sich der Schlüssel nach zehn Schritten in einem Schieberegister wieder. Für das oben genannte Beispiel bedeutet dies, dass jeder der 100 Schlüssel zehnmal benutzt werden kann, ehe er sich wiederholt. Hierdurch erhöht sich die Zeit, bis sich ein Schlüssel wiederholt, auf 420 Minuten.

Durch eine Verlängerung der Schlüssellänge von 10 Bit auf 1024 Bit erhöht sich linear auch die Dauer auf das 1.224-fache (1.024 * 420 Minuten = 7.168 Stunden = ungefähr 300 Tage).

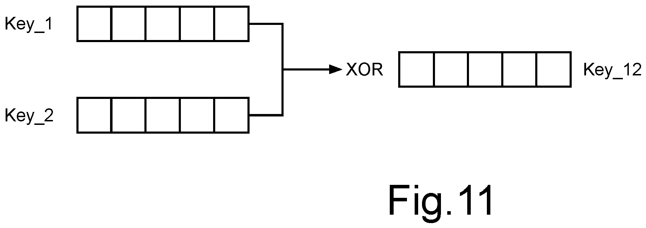

Aus vorhandenen Schlüsseln können durch Kombination neue Schlüssel erzeugt werden. Wird ein Schlüssel Key_1 mit einem anderen Schlüssel Key_2 über eine Rechenvorschrift verknüpft, beispielsweise eine XOR-Verknüpfung, entsteht ein neuer Schlüssel Key_12 wie in der Fig. 11 dargestellt. Bei 100 Schlüsseln lassen sich somit 4.950 neue Schlüssel erzeugen (N * (N-1)/2) mit N = Anzahl der Schlüssel). In diesem weiterentwickelten Beispiel würde dies eine Zeitdauer bis zum Wiederholen der gleichen Nachricht Code, welche die verschlüsselten Identifikationsdaten ID beinhaltet, auf das ungefähr 50-fache verlängern, also auf 15.000 Tage oder 41 Jahre.

Diese Methoden für die Verschlüsselung einer Leuchten-ID als Identifikationsdaten ID lassen sich auch auf Daten erweitern, die ebenfalls über Licht übertragen werden könnten und nach diesem Verfahren gesichert übertragen werden können.

Fig. 9 zeigt mögliche Operationen, die auf einen vorhandenen Schlüssel angewendet werden können. Beispielsweise kann das linke Bit anzeigen, dass ein Schlüssel nach links zu verschieben ist (key shift left, KSL) und/oder das rechte Bit in der Signalisierungsbitfolge KeySig kann anzeigen, dass der Schlüssel nach rechts geschoben werden soll (key shift right, KSR). Tatsächlich ist auf Bitebene mit Verschieben/Shift das Rotieren der Bits in einem Schieberegister gemeint, bei welchem ein aus dem Schieberegister herausgeschobenes Bit auf der gegenüberliegenden Seite wieder eingeschoben wird. Das mittlere Bit kann dazu benutzt werden anzuzeigen, dass ein vordefinierter Algorithmus Calc zur Veränderung des Schlüssels beziehungsweise der Parameter zur Anwendung einer Rechenvorschrift ausgeführt werden soll.

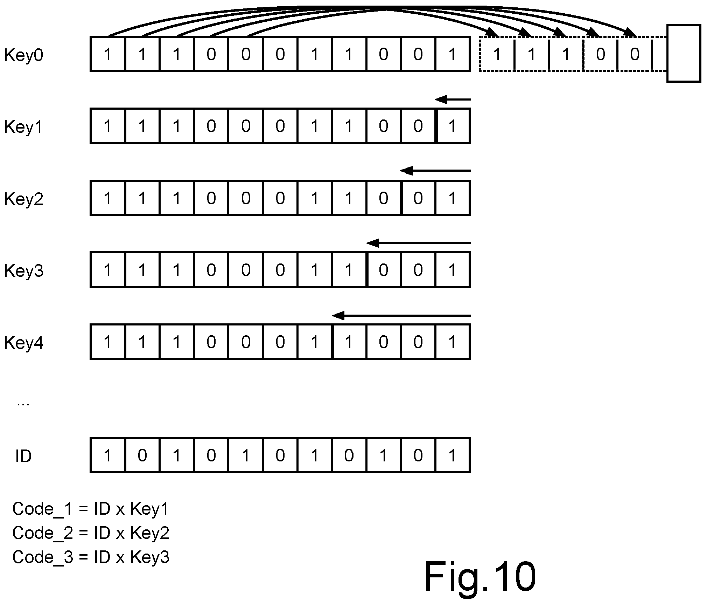

Fig. 10 zeigt, wie ausgehend von einem Ausgangsschlüssel Key0 ein erster Schlüssel Key1, ein zweiter Schlüssel Key2, ein dritter Schlüssel Key3, ein vierter Schlüssel Key4 und so weiter durch bitweise Rotation des Schlüssels erzeugt werden. Die Anwendung des ersten Schlüssels Key1 auf die Identifikationsdaten ID ergibt somit eine erste Nachricht Code_1, eine Anwendung des zweiten Schlüssels Key2 auf die Identifikationsdaten ID ergibt dementsprechend eine zweite Nachricht Code_2 und entsprechend weiter.

Fig. 11 zeigt schließlich, wie aus dem Schlüssel Key_1 und dem Schlüssel Key_2 durch bitweise Anwendung eines XOR-Operators der neue Schlüssel Key_12 erzeugt werden kann.

Die Ausführungsbeispiele dienen lediglich der Erläuterung der Erfindung und sind für diese nicht beschränkend. So kann insbesondere die Zuordnung der Datenspeichereinheit, der Verschlüsselungseinheit sowie der Sendeeinheit innerhalb der Beleuchtungseinrichtung beliebig gestaltet sein, ohne den Gedanken der Erfindung zu verlassen.

Somit wurde voranstehend gezeigt, wie ein Schlüsseltransport für die Verschlüsselung von ortsgebundenen Informationen zur Sicherstellung einer geschützten Kommunikation ausgestaltet sein kann.

## Patentansprüche

1. Beleuchtungseinrichtung (12) zum verschlüsselten Übertragen von Messwertedaten und/oder Identifikationsdaten (ID) zu einem mobilen Endgerät (14), umfassend:
- ein Leuchtmittel (13), und
- ein elektronisches Betriebsgerät (11) zum Betreiben des Leuchtmittels (13),
- eine Datenspeichereinheit, in der in einem dafür reservierten Speicherbereich ein erster Schlüssel (EKey) gespeichert ist,
- eine Verschlüsselungseinheit, welche dazu ausgelegt ist, einen ersten Schlüssel (EKey) aus dem reservierten Speicherbereich auszulesen und Messwertedaten und/oder Identifikationsdaten (ID), welche zur Übertragung an das mobile Endgerät (14) bestimmt sind, gemäß einer vorgebbaren Verschlüsselungsoperation in eine mit dem ersten Schlüssel (EKey) verschlüsselte Nachricht (Code) umzusetzen, und
- eine Sendeeinheit (13, 16) zur lokalen Abstrahlung von Signalen, welche die Messwertedaten und/oder Identifikationsdaten beinhalten, und welche keinen Rückkanal aufweist, und welche dazu ausgelegt ist, die verschlüsselte Nachricht (Code) an das mobile Endgerät (14) zu senden, wobei:
- in dem reservierten Speicherbereich eine Vielzahl von ersten Schlüsseln (EKey) gespeichert sind,
- die Verschlüsselungseinheit einen ersten Schlüssel aus dem reservierten Speicherbereich ausliest, wobei die ersten Schlüssel nach einem vorgegebenen Muster verwendet werden,
- wobei der erste Schlüssel abhängig vom Ort und/oder der Zeit ist,
- wobei die Beleuchtungseinrichtung eine Schnittstelle aufweist, welche schreibenden Zugriff auf den reservierten Speicherbereich zum Ändern der Vielzahl von ersten Schlüsseln hat, und
- das verschlüsselte Übertragen einer Identifikationsnummer einer Leuchte (ID) zu einem mobilen Endgerät (14) zum Zwecke der Positionsbestimmung geschieht.

2. Beleuchtungseinrichtung (12) nach Anspruch 1,
**dadurch gekennzeichnet,**
**dass** die Beleuchtungseinrichtung eine Schnittstelle aufweist, welche dazu ausgelegt ist, schreibend auf den reservierten Speicherbereich zuzugreifen.

3. Beleuchtungseinrichtung (12) nach Anspruch 2,
**dadurch gekennzeichnet,**
**dass** die Schnittstelle Teil des elektronischen Betriebsgeräts (11) ist, wobei das elektronische Betriebsgerät (11) dazu ausgelegt ist, in einem bestimmungemäßen Betrieb der Beleuchtungseinrichtung (12) das Leuchtmittel (13) in Abhängigkeit von einem an der Schnittstelle eingespeisten Steuersignal zu betreiben.

4. Beleuchtungseinrichtung (12) nach einem der vorhergehenden Ansprüche,
**dadurch gekennzeichnet,**
**dass** die Beleuchtungseinrichtung (12) eine Sende-Empfangs-Einheit (16), insbesondere eine Funkbake, aufweist, wobei die Sende-Empfangs-Einheit (16) dazu ausgelegt ist, schreibend auf den reservierten Speicherbereich zuzugreifen.

5. Beleuchtungseinrichtung (12) nach Anspruch 4,
**dadurch gekennzeichnet,**
**dass** die Sendeeinheit (13, 16) durch die Sende-Empfangs-Einheit (16) gebildet ist, wobei die Datenspeichereinheit und die Verschlüsselungseinheit auf Komponenten der Sende-Empfangs-Einheit (16) ausgebildet sind.

6. Beleuchtungseinrichtung (12) nach einem der Ansprüche 1 bis 5,
**dadurch gekennzeichnet,**
**dass** die Sendeeinheit (13, 16) das Leuchtmittel (13) umfasst, welches dazu ausgelegt ist, die Nachricht (Code) mittels einer lichtbasierten Kommunikation zu senden, wobei die Datenspeichereinheit und die Verschlüsselungseinheit auf Komponenten des elektronischen Betriebsgeräts (11) ausgebildet sind.

7. Beleuchtungseinrichtung (12) nach einem der vorhergehenden Ansprüche,
**dadurch gekennzeichnet,**
**dass** der reservierte Speicherbereich eine Vielzahl von ersten Schlüsseln (EKey) umfasst, wobei die Verschlüsselungseinheit dazu ausgelegt ist, in Abhängigkeit von einem an die Beleuchtungseinrichtung (12) bereitstellbaren Schlüsselaktivierungssignal einen der Vielzahl der ersten Schlüssel für die Verschlüsselungsoperation zu verwenden.

8. Beleuchtungssystem (100) mit zumindest einer Beleuchtungseinrichtung (12) nach einem der vorhergehenden Ansprüche, wobei das Beleuchtungssystem (100) weiterhin einen zentralen Schlüsselserver (20) umfasst, welcher in einer Kommunikationsverbindung mit der zumindest einen Beleuchtungseinrichtung (12) steht.

9. Beleuchtungssystem (100) nach Anspruch 8,
**dadurch gekennzeichnet,**
**dass** der Schlüsselserver (20) dazu ausgelegt ist, über die Kommunikationsverbindung ein Schlüsselgenerierungssignal an die zumindest eine Beleuchtungseinrichtung (12) zu senden, wobei die zumindest eine Beleuchtungseinrichtung (12) dazu ausgelegt ist, in Abhängigkeit von dem über die Kommunikationsverbindung empfangenen Schlüsselgenerierungssignal einen individuellen lokalen zweiten Schlüssel zu erzeugen.

10. Beleuchtungssystem (100) nach Anspruch 9,
**dadurch gekennzeichnet,**
**dass** die zumindest eine Beleuchtungseinrichtung (12) dazu ausgelegt ist, zum Zeitpunkt der Erzeugung des individuellen lokalen zweiten Schlüssels einen Zeitgeber mit einer individuell vorgebbaren Ablaufdauer zu starten, und nach dem Ablaufen des Zeitgebers den zweiten Schlüssel als neuen für die Verschlüsselungsoperation verwendeten ersten Schlüssel über die Kommunikationsverbindung an den Schlüsselserver (20) zu melden.

11. Beleuchtungssystem (100) nach Anspruch 8,
**dadurch gekennzeichnet,**
**dass** die zumindest eine Beleuchtungseinrichtung (12) dazu ausgelegt ist, in Abhängigkeit von einem beleuchtungseinrichtungsinternen Zeitgeber einen individuellen lokalen zweiten Schlüssel zu erzeugen.

12. Beleuchtungssystem (100) nach Anspruch 8,
**dadurch gekennzeichnet,**
**dass** die zumindest eine Beleuchtungseinrichtung (12) eine erste und eine zweite Beleuchtungseinrichtung umfasst, wobei der zentrale Schlüsselserver (20) dazu ausgelegt ist, einen ersten Individualschlüssel zu erzeugen und derart über die Kommunikationsverbindung zu senden, dass der erste Individualschlüssel in den für den ersten Schlüssel (EKey) reservierten Speicherbereich der ersten Beleuchtungseinrichtung geschrieben wird, und einen zweiten Individualschlüssel zu erzeugen und derart über die Kommunikationsverbindung zu senden, dass der zweite Individualschlüssel in den für den ersten Schlüssel (EKey) reservierten Speicherbereich der zweiten Beleuchtungseinrichtung geschrieben wird, wobei der zweite Individualschlüssel verschieden von dem ersten Individualschlüssel ist.

13. Beleuchtungssystem (100) nach einem der vorhergehenden Ansprüche 10 bis 14,
**dadurch gekennzeichnet,**
**dass** die zumindest eine Beleuchtungseinrichtung (12) eine Vielzahl von Beleuchtungseinrichtungen umfasst, insbesondere eine erste und eine zweite Beleuchtungseinrichtung, wobei die jeweiligen Sendeeinheiten (13, 16) der Vielzahl von Beleuchtungseinrichtungen als Sende-Empfangs-Einheiten zur bidirektionalen Kommunikation ausgelegt sind, und wobei die Vielzahl von Beleuchtungseinrichtungen dazu ausgelegt ist, gemeinsam über die jeweiligen Sende-Empfangs-Einheiten ein Maschennetzwerk zur Kommunikation der einzelnen Beleuchtungseinrichtungen der Vielzahl von Beleuchtungseinrichtungen untereinander zu betreiben.

14. Verfahren zum Betreiben einer Beleuchtungseinrichtung (12) zum verschlüsselten Übertragen von Messwertedaten und/oder Identifikationsdaten (ID) zu einem mobilen Endgerät (14), umfassend:
- Speichern einer Vielzahl von ersten Schlüsseln in einem dafür reservierten Speicherbereich einer Datenspeichereinheit der Beleuchtungseinrichtung,
- Auslesen eines ersten Schlüssels (EKey) aus dem reservierten Speicherbereich, wobei die ersten Schlüssel nach einem vorgegebenen Muster verwendet werden, und wobei der erste Schlüssel abhängig vom Ort und/oder der Zeit ist,
- Umsetzen von Messwertedaten und/oder Identifikationsdaten (ID), welche zur Übertragung an das mobile Endgerät (14) bestimmt sind, gemäß einer vorgebbaren Verschlüsselungsoperation in eine mit dem ersten Schlüssel (EKey) verschlüsselte Nachricht (Code), und
- Senden der verschlüsselten Nachricht (Code) an das mobile Endgerät (14) durch eine Sendeeinheit (13, 16) der Beleuchtungseinrichtung (12) zur lokalen Abstrahlung von Signalen, welche die Messwertedaten und/oder Identifikationsdaten beinhalten, und welche keinen Rückkanal aufweist,
wobei das verschlüsselte Übertragen einer Identifikationsnummer einer Leuchte zu einem mobilen Endgerät zum Zwecke der Positionsbestimmung geschieht.

15. Verfahren nach Anspruch 14,
**gekennzeichnet durch**:
- Verwenden eines von einer Vielzahl von ersten Schlüsseln (EKey), welche der reservierte Speicherbereich umfasst, für die Verschlüsselungsoperation in Abhängigkeit von einem an die Beleuchtungseinrichtung (12) bereitgestellten Schlüsselaktivierungssignal.

16. Verfahren nach Anspruch 14 oder 15,
**gekennzeichnet durch**:
- Senden eines Schlüsselgenerierungssignals über eine Kommunikationsverbindung an die Beleuchtungseinrichtung (12) durch einen Schlüsselserver (20), und
- in Abhängigkeit von dem über die Kommunikationsverbindung empfangenen Schlüsselgenerierungssignal Erzeugen eines lokalen Individualschlüssels durch die Beleuchtungseinrichtung (12) zur Verwendung für die Verschlüsselungsoperation.

## Claims

1. Lighting device (12) for the encrypted transmission of measurement data and/or identification data (ID) to a mobile device (14), comprising:
- a light source (13), and
- an electronic control device (11) for operating the light source (13),
- a data storage unit in which a first key (EKey) is stored in a therefore reserved memory area,
- an encryption unit which is configured to read a first key (EKey) from the reserved memory area and to convert measurement data and/or identification data (ID), which are intended for transmission to the mobile device (14), into a message (code) encrypted with the first key (EKey) in accordance with a predeterminable encryption operation, and
- a transmission unit (13, 16) for local transmission of signals which contain the measurement data and/or identification data and which has no return channel, and which is configured to transmit the encrypted message (code) to the mobile device (14),
wherein:
- a plurality of first keys (EKey) is stored in the reserved memory area,
- the encryption unit reads a first key from the reserved memory area, wherein the first keys are used according to a predefined pattern,
- the first key is dependent on the location and/or time,
- the lighting device comprises an interface having write access to the reserved memory area for changing the plurality of first keys, and
- the encrypted transmission of an identification number of a luminaire (ID) to a mobile device (14) takes place for the purpose of position determination.

2. The lighting device (12) according to claim 1, **characterized in that**
that the lighting device comprises an interface which is configured for write access to the reserved memory area.

3. The lighting device (12) according to claim 2,
**characterized in that**
**in that** the interface is part of the electronic control device (11), the electronic control device (11) being configured to operate the light source (13) as a function of a control signal fed in at the interface when the lighting device (12) is operating as intended.

4. The lighting device (12) according to any one of the preceding claims,
**characterized in that**
the lighting device (12) comprises a transceiver unit (16), in particular a radio beacon, the transceiver unit (16) being configured for write access to the reserved memory area.

5. The lighting device (12) according to claim 4,
**characterized in that**
**in that** the transmission unit (13, 16) is formed by the transceiver unit (16), wherein the data storage unit and the encryption unit are formed on components of the transceiver unit (16).

6. The lighting device (12) according to any one of claims 1 to 5,
**characterized in that**
**in that** the transmission unit (13, 16) comprises the light source (13), which is configured to transmit the message (code) by means of light-based communication, the data storage unit and the encryption unit being formed on components of the electronic control device (11).

7. The lighting device (12) according to any one of the preceding claims,
**characterized in that**
the reserved memory area comprises a plurality of first keys (EKey), wherein the encryption unit is configured to use one of the plurality of first keys for the encryption operation in dependence on a key activation signal that can be provided to the lighting device (12).

8. A lighting system (100) with at least one lighting device (12) according to any one of the preceding claims, wherein the lighting system (100) further comprises a central key server (20) which is in a communication connection with the at least one lighting device (12).

9. The lighting system (100) according to claim 8,
**characterized in that**
the key server (20) is configured to send a key activation signal to the at least one lighting device (12) via the communication connection, the at least one lighting device (12) being configured to generate an individual local second key as a function of the key activation signal received via the communication connection.

10. The lighting system (100) according to claim 9,
**characterized in that**
the at least one lighting device (12) is configured to start a timer with an individually predeterminable expiry duration at the time of generation of the individual local second key, and to report the second key as a new first key used for the encryption operation to the key server (20) via the communication connection after the timer has expired.

11. The lighting system (100) according to claim 8,
**characterized in that**
the at least one lighting device (12) is configured to generate an individual local second key as a function of a timer internal the lighting device.

12. The lighting system (100) according to claim 8,
**characterized in that**
the at least one lighting device (12) comprises a first and a second lighting device, the central key server (20) being configured to generate a first individual key and to transmit it via the communication connection in such a way that the first individual key is written to the memory area of the first lighting device reserved for the first key (EKey), and to generate a second individual key and to transmit it via the communication connection in such a way that the second individual key is written to the memory area of the second lighting device reserved for the first key (EKey), the second individual key being different from the first individual key.

13. The lighting system (100) according to any one of the preceding claims 10 to 14,
**characterized in that**
the at least one lighting device (12) comprises a plurality of lighting devices, in particular a first and a second lighting device, the respective transmission units (13, 16) of the plurality of lighting devices being configured as transceiver units for bidirectional communication, and the plurality of lighting devices being configured to jointly operate a mesh network via the respective transceiver unit for communication between the individual lighting devices of the plurality of lighting devices.

14. A method for operating a lighting device (12) for the encrypted transmission of measurement data and/or identification data (ID) to a mobile device (14), comprising:
- Storing a plurality of first keys in a memory area reserved for this purpose in a data storage unit of the lighting device,
- Reading a first key (EKey) from the reserved memory area, wherein the first keys are used according to a predetermined pattern, and wherein the first key is dependent on location and/or time,
- Conversion of measurement data and/or identification data (ID), which are intended for transmission to the mobile device (14), into a message (code) encrypted with the first key (EKey) in accordance with a predeterminable encryption operation, and
- Transmission of the encrypted message (code) to the mobile device (14) by a transmission unit (13, 16) of the lighting device (12) for local emission of signals which contain the measurement data and/or identification data and which has no return channel,
wherein the encrypted transmission of an identification number of a luminaire to a mobile device is carried out for the purpose of determining its position.

15. The method according to claim 14,
**characterized by**:
- utilizing one of a plurality of first keys (EKey) comprising the reserved memory area for the encryption operation in response to a key activation signal provided to the lighting device (12).

16. The method according to claim 14 or 15,
**characterized by**:
- transmission of a key activation signal via a communication connection to the lighting device (12) by a key server (20), and
- generating, in response to the key activation signal received via the communication connection, a local individual key by the lighting device (12) for use in the encryption operation.

## Revendications

1. Dispositif d'éclairage (12) pour la transmission cryptée de données de valeurs mesurées et/ou de données d'identification (ID) à un terminal mobile (14), comprenant:
- un moyen d'éclairage (13), et
- un appareil électronique (11) pour faire fonctionner le moyen d'éclairage (13),
- une unité de stockage de données dans laquelle une première clé (EKey) est stockée dans une zone de mémoire réservée à cet effet,
- une unité de cryptage qui est conçue pour lire une première clé (EKey) dans la zone de mémoire réservée et pour convertir des données de valeurs de mesure et/ou des données d'identification (ID) qui sont destinées à être transmises au terminal mobile (14), selon une opération de cryptage pouvant être prédéterminée, en un message (code) crypté avec la première clé (EKey), et
- une unité d'émission (13, 16) pour l'émission locale de signaux qui contiennent les données de valeurs de mesure et/ou les données d'identification, et qui ne présente pas de canal de retour, et qui est conçue pour envoyer le message codé (code) au terminal mobile (14),
où
- une pluralité de premières clés (EKey) sont stockées dans la zone de mémoire réservée,
- l'unité de chiffrement lit une première clé à partir de la zone de mémoire réservée, les premières clés étant utilisées selon un modèle prédéterminé,
- la première clé dépendant du lieu et/ou de l'heure,
- dans lequel le dispositif d'éclairage comprend une interface qui a un accès en écriture à la zone de mémoire réservée pour modifier la pluralité de premières clés, et
- la transmission cryptée d'un numéro d'identification d'une lampe (ID) à un terminal mobile (14) dans le but de déterminer la position se fait.

2. Dispositif d'éclairage (12) selon la revendication 1, **caractérisé en ce que**
le dispositif d'éclairage présente une interface qui est conçue pour accéder en écriture à la zone de mémoire réservée.

3. Dispositif d'éclairage (12) selon la revendication 2, **caractérisé en ce que**
l'interface fait partie de l'appareil d'exploitation électronique (11), l'appareil d'exploitation électronique (11) étant conçu pour faire fonctionner le moyen d'éclairage (13) en fonction d'un signal de commande injecté à l'interface, lors d'un fonctionnement conforme à la destination du dispositif d'éclairage (12).

4. Dispositif d'éclairage (12) selon l'une quelconque des revendications précédentes,
**caractérisé en ce que**
le dispositif d'éclairage (12) présente une unité d'émission-réception (16), en particulier une balise radio, l'unité d'émission-réception (16) étant conçue pour accéder en écriture à la zone de mémoire réservée.

5. Dispositif d'éclairage (12) selon la revendication 4, **caractérisé en ce que**
l'unité d'émission (13, 16) est formée par l'unité d'émission-réception (16), l'unité de stockage de données et l'unité de cryptage étant formées sur des composants de l'unité d'émission-réception (16).

6. Dispositif d'éclairage (12) selon l'une quelconque des revendications 1 à 5,
**caractérisé en ce que**
l'unité d'émission (13, 16) comprend le moyen d'éclairage (13) qui est conçu pour émettre le message (code) au moyen d'une communication basée sur la lumière, l'unité de stockage de données et l'unité de cryptage étant formées sur des composants de l'appareil d'exploitation électronique (11).

7. Dispositif d'éclairage (12) selon l'une quelconque des revendications précédentes,
**caractérisé en ce que**
la zone de mémoire réservée comprend une pluralité de premières clés (EKey), l'unité de cryptage étant conçue pour utiliser l'une de la pluralité de premières clés pour l'opération de cryptage en fonction d'un signal d'activation de clé pouvant être fourni au dispositif d'éclairage (12).

8. Système d'éclairage (100) comprenant au moins un dispositif d'éclairage (12) selon l'une quelconque des revendications précédentes, dans lequel le système d'éclairage (100) comprend en outre un serveur de clés central (20) qui est en liaison de communication avec ledit au moins un dispositif d'éclairage (12).

9. Système d'éclairage (100) selon la revendication 8, **caractérisé en ce que**
le serveur de clés (20) est conçu pour envoyer un signal de génération de clés à l'au moins un dispositif d'éclairage (12) par l'intermédiaire de la liaison de communication, l'au moins un dispositif d'éclairage (12) étant conçu pour générer une deuxième clé locale individuelle en fonction du signal de génération de clés reçu par l'intermédiaire de la liaison de communication.

10. Système d'éclairage (100) selon la revendication 9, **caractérisé en ce que**
l'au moins un dispositif d'éclairage (12) est conçu pour lancer, au moment de la génération de la deuxième clé locale individuelle, une minuterie avec une durée d'écoulement pouvant être prédéfinie individuellement, et pour signaler, après l'écoulement de la minuterie, la deuxième clé au serveur de clés (20) par l'intermédiaire de la liaison de communication, en tant que nouvelle première clé utilisée pour l'opération de cryptage.

11. Système d'éclairage (100) selon la revendication 8, **caractérisé en ce que**
le au moins un dispositif d'éclairage (12) est conçu pour générer une deuxième clé locale individuelle en fonction d'une horloge interne au dispositif d'éclairage.

12. Système d'éclairage (100) selon la revendication 8, **caractérisé en ce que**
le au moins un dispositif d'éclairage (12) comprend un premier et un deuxième dispositif d'éclairage, le serveur de clés central (20) étant adapté pour générer et transmettre une première clé individuelle sur la liaison de communication de telle sorte que la première clé individuelle soit écrite dans la zone de mémoire du premier dispositif d'éclairage réservée à la première clé (EKey), et à générer une deuxième clé individuelle et à l'envoyer via la liaison de communication de telle sorte que la deuxième clé individuelle soit écrite dans la zone de mémoire du deuxième dispositif d'éclairage réservée à la première clé (EKey), la deuxième clé individuelle étant différente de la première clé individuelle.

13. Système d'éclairage (100) selon l'une quelconque des revendications précédentes 10 à 14,
**caractérisé en ce que**
le au moins un dispositif d'éclairage (12) comprend une pluralité de dispositifs d'éclairage, en particulier un premier et un deuxième dispositifs d'éclairage, les unités d'émission respectives (13, 16) de la pluralité de dispositifs d'éclairage étant conçues comme des unités d'émission-réception pour une communication bidirectionnelle, et la pluralité de dispositifs d'éclairage étant conçue pour exploiter conjointement, par l'intermédiaire des unités d'émission-réception respectives, un réseau maillé pour la communication entre les différents dispositifs d'éclairage de la pluralité de dispositifs d'éclairage.

14. Procédé d'exploitation d'un dispositif d'éclairage (12) pour la transmission cryptée de données de valeurs mesurées et/ou de données d'identification (ID) à un terminal mobile (14), comprenant:
- le stockage d'une pluralité de premières clés dans une zone de mémoire réservée à cet effet d'une unité de stockage de données du dispositif d'éclairage,
- la lecture d'une première clé (EKey) à partir de la zone de mémoire réservée, les premières clés étant utilisées selon un modèle prédéterminé, et la première clé dépendant du lieu et/ou du temps,
- la conversion de données de valeurs mesurées et/ou de données d'identification (ID), qui sont destinées à être transmises au terminal mobile (14), selon une opération de cryptage pouvant être prédéterminée, en un message (code) crypté avec la première clé (EKey), et
- l'envoi du message codé (code) au terminal mobile (14) par une unité d'émission (13, 16) du dispositif d'éclairage (12) pour l'émission locale de signaux qui contiennent les données de valeurs de mesure et/ou les données d'identification, et qui ne présente pas de canal de retour,
la transmission cryptée d'un numéro d'identification d'un luminaire à un terminal mobile étant effectuée dans le but de déterminer la position.

15. Procédé selon la revendication 14,
**caractérisé par**:
- l'utilisation de l'une d'une pluralité de premières clés (EKey) que la zone de mémoire réservée comprend pour l'opération de chiffrement en réponse à un signal d'activation de clé fourni au dispositif d'éclairage (12).

16. Procédé selon la revendication 14 ou 15,
**caractérisé par**:
- l'envoi d'un signal de génération de clé sur une liaison de communication au dispositif d'éclairage (12) par un serveur de clé (20), et
- en fonction du signal de génération de clé reçu par l'intermédiaire de la liaison de communication, la génération par le dispositif d'éclairage (12) d'une clé individuelle locale destinée à être utilisée pour l'opération de cryptage.
